# EUROPÄISCHE PATENTSCHRIFT

(11) **EP 3 488 152 B1**
(45) Veröffentlichungstag und Bekanntmachung des Hinweises auf die Patenterteilung: **26.08.2020**
(21) Anmeldenummer: 17749140.4
(22) Anmeldetag: 20.07.2017
(51) Int. Cl.: F24D 3/18, F24D 17/02, F24D 19/10, F25B 6/04, F24D 3/08, F25B 30/02

(54) **WÄRMEPUMPENHEIZUNG UND VERFAHREN ZUM BETREIBEN EINER DERARTIGEN WÄRMEPUMPENHEIZUNG**
HEAT PUMP HEATING SYSTEM AND METHOD FOR OPERATING SUCH A HEAT PUMP HEATING SYSTEM
CHAUFFAGE PAR POMPE À CHALEUR ET PROCÉDÉ PERMETTANT DE FAIRE FONCTIONNER UN CHAUFFAGE PAR POMPE À CHALEUR DE CE TYPE

(30) Priorität: 25.07.2016 DE 102016113630
(43) Veröffentlichungstag der Anmeldung: 29.05.2019
(73) Patentinhaber: Carnotherm Wärmelogistik GmbH&Co. KG, 90411 Nürnberg (DE)
(72) Erfinder: GEBHARDT, Peter, 02763 Radgendorf (DE)
(74) Vertreter: Schlögl, Markus
(86) Internationale Anmeldenummer: PCT/EP2017/068380
(87) Internationale Veröffentlichungsnummer: WO 2018/019703

(56) Entgegenhaltungen:
- EP-A2- 2 420 745
- GB-A- 2 414 289
- JP-A- 2003 050 050

## Beschreibung

Die Erfindung betrifft eine Wärmepumpenheizung und ein Verfahren zum Betreiben einer derartigen Wärmepumpenheizung.

In einer Wärmepumpe, der zentralen Energiequelle der Wärmepumpenheizung, durchströmt ein Arbeitsmedium (Kältemittel, Wärmetransport-Medium) in einem geschlossenen Kreislauf einen Verdampfer, einen Kompressor (Verdichter), einen Kondensator (Verflüssiger) und ein Expansionsventil. Im Verdampfer wird das Arbeitsmedium verdampft und nimmt dabei Energie aus einer Wärmequelle, beispielsweise der Außenluft, auf. Im Kompressor wird das Arbeitsmedium komprimiert und dabei erwärmt. Im Kondensator erfolgt die Verflüssigung des unter Druck stehenden Arbeitsmediums, dabei gibt es Energie in Form von Wärme an eine Flüssigkeit, insbesondere Wasser, ab. Anschließend wird das flüssige Arbeitsmedium im Expansionsventil entspannt und gelangt bei niedrigem Druck und niedriger Temperatur wieder in den Verdampfer, um den Kreislauf erneut zu durchlaufen.

In einer Wärmepumpenheizung wird die bereits angesprochene Flüssigkeit, die durch die Wärmepumpe erwärmt wird, für eine oder mehrere Heizungs- und/oder Warmwasserbereitungseinrichtungen, beispielsweise Heizkörper, Fußbodenheizung, Warmwasserbereiter und Durchlauferhitzer, genutzt.

Die EP 2 420 745 A2 offenbart ein Wärmepumpensystem mit einem Boiler. Das Wärmepumpensystem weist zwei Wärmetauscher auf. Es weist auch eine erste und eine zweite Heizungs- und/oder Warmwasserbereitungseinrichtung auf.

Die JP 2003 050050 A offenbart eine Wärmepumpe für eine Bodenheizung und eine Warmwasserbereitung, wobei entweder für Heizung und Warmwasserbereitung separate Wärmetauscher vorliegen, deren Kreise komplett voneinander getrennt sind oder ein Wärmetauscher für die Heizung mit dem für Warmwasser in Reihe geschaltet ist.

Die UK 2 414 289 A offenbart eine Wärmepumpeneinrichtung mit einer Heizung und einer Warmwasserbereitung.

Bei bekannten Wärmepumpenheizungen wird die von der Wärmepumpe theoretisch bereitgestellte Energie nicht optimal zu Heizzwecken genutzt.

Der Erfindung liegt die Aufgabe zugrunde, eine neue Wärmepumpenheizung und ein Verfahren zum Betreiben einer derartigen Wärmepumpenheizung anzugeben, insbesondere eine Wärmepumpenheizung, die sich durch eine hohe Effizienz bei der Energienutzung für Heizzwecke auszeichnet.

Diese Aufgabe wird hinsichtlich der Wärmepumpenheizung erfindungsgemäß mit den Merkmalen des Anspruchs 1 und hinsichtlich des Verfahrens durch die Merkmale des Anspruchs 7 gelöst. Weiterbildungen sind in den jeweils abhängigen Ansprüchen angegeben.

Die Wärmepumpenheizung gemäß der Erfindung umfasst ein Arbeitsmedium (Kältemittel, Wärmetransport-Medium), das in einem geschlossenen Arbeitsmedium-Kreislauf einen Kondensator (Verflüssiger) durchströmt. Als weitere Komponenten, die vom Arbeitsmedium durchströmt werden, sind üblicherweise ein Verdampfer, einen Kompressor (Verdichter) und ein Expansionsventil vorgesehen.

Der Kondensator der erfindungsgemäßen Wärmepumpenheizung weist mindestens einen ersten Wärmetauscher und mindestens einen zweiten Wärmetauscher auf, die nacheinander an ihrer jeweiligen Primärseite vom Arbeitsmedium durchströmt werden, wobei der erste Wärmetauscher hinsichtlich des Arbeitsmediums stromaufwärts zum zweiten Wärmetauscher angeordnet ist. Vorzugsweise sind erster und zweiter Wärmetauscher räumlich getrennt voneinander in der Wärmepumpenheizung angeordnet. Insbesondere kann es sich bei erstem und zweitem Wärmetauscher um zwei getrennte Baueinheiten handeln.

Weiter sieht die Erfindung vor, dass der erste Wärmetauscher an seiner Sekundärseite von Flüssigkeit, insbesondere Wasser, durchströmt wird, die im Kreislauf durch eine erste hydraulische Weiche geführt wird, vorzugsweise mittels einer ersten Pumpe. Auch der zweite Wärmetauscher wird an seiner Sekundärseite von Flüssigkeit, insbesondere Wasser, durchströmt, die im Kreislauf durch eine zweite hydraulische Weiche geführt wird, vorzugsweise mittels einer zweiten Pumpe.

Der erste Wärmetauscher und der zweite Wärmetauscher sind dazu ausgebildet, Energie vom Arbeitsmedium an die Flüssigkeit zu übertragen und dadurch die durchströmende Flüssigkeit zu erwärmen.

Weiter ist vorgesehen, dass die Flüssigkeit in der ersten hydraulischen Weiche eine höhere Temperatur aufweist als die Flüssigkeit in der zweiten hydraulischen Weiche. Dadurch steht Flüssigkeit mit zwei verschiedenen Temperaturen zur Versorgung von Heizungs- und/oder Warmwasserbereitungseinrichtungen zur Verfügung, so dass die Möglichkeit besteht, in Abhängigkeit von der aktuellen Heizlast und damit vom Wärmebedarf eine Flüssigkeit geeigneter Temperatur auszuwählen und die Heizung damit energieeffizient zu betreiben.

Die erfindungsgemäße Wärmepumpenheizung umfasst ferner mindestens eine erste Heizungs- und/oder Warmwasserbereitungseinrichtung, beispielsweise mit einem oder mehreren Heizkörpern und/oder mit einem Warmwasserspeicher oder Durchlauferhitzer für die Warmwasserversorgung, und mindestens eine zweite Heizungs- und/oder Warmwasserbereitungseinrichtung, beispielsweise eine Fußbodenheizung. Hierbei ist die erste Heizungs- und/oder Warmwasserbereitungseinrichtung für höhere Vorlauftemperaturen bestimmt ist als die zweite Heizungs- und/oder Warmwasserbereitungseinrichtung.

Weiter ist vorgesehen, dass die Wärmepumpenheizung ein hydraulisches System aufweist, das mit Flüssigkeit, insbesondere Wasser, gefüllt ist. Diese Flüssigkeit durchströmt das hydraulische System. Das hydraulische System verbindet die erste Heizungs- und/oder Warmwasserbereitungseinrichtung und die zweite Heizungs- und/oder Warmwasserbereitungseinrichtung und die erste hydraulische Weiche und die zweite hydraulische Weiche hydraulisch miteinander.

Unter erster und zweiter hydraulischer Weiche wird insbesondere eine Einrichtung verstanden, die einen Heizungskreislauf enthaltend den jeweiligen Wärmetauscher und einen Verbraucherkreislauf enthaltend die Heizungs- und/oder Wasserbereitungseinrichtungen und das hydraulische System hydraulisch voneinander entkoppelt. Bei erster und zweiter hydraulischer Weicher kann es sich jeweils auch um einen Speicher handeln.

Ferner sieht die Erfindung vor, dass das hydraulische System ein Mischventil, insbesondere ein motorisch betriebenes Mischventil, zur Änderung und/oder Einstellung des hydraulischen Systems in Abhängigkeit von der aktuellen Heizlast der ersten Heizungs- und/oder Warmwasserbereitungseinrichtung und/oder der zweiten Heizungs- und/oder Warmwasserbereitungs-einrichtung aufweist.

Unter aktueller Heizlast wird hierbei insbesondere der Wärmebedarf verstanden, der sich beispielsweise aus der Differenz zwischen Vorlauf- und Rücklauftemperatur der jeweiligen Heizungs- und/oder Warmwasserbereitungs-einrichtung ergibt. Der Wärmebedarf der jeweiligen Heizungs- und/oder Warmwasserbereitungseinrichtung steigt hierbei von einem ausgeschalteten oder alternativ einem gesättigten Zustand der Heizungs- und/oder Warmwasserbereitungseinrichtung (kein weiterer Wärmebedarf oder vergleichsweise sehr geringer Wärmebedarf) über einen Zustand geringer Last (vergleichsweise geringer Wärmebedarf) und über einen Zustand mittlerer Last (vergleichsweise mittlerer Wärmebedarf) und über einen Zustand höherer Last (vergleichsweise höherer Wärmebedarf) bis hin zu einem Volllast-Zustand (vergleichsweise sehr hoher Wärmebedarf) an.

Bei der angesprochenen Flüssigkeit kann es sich um Wasser handeln. Es kann aber auch jedes andere zum Wärmetransport geeignete Medium verwendet werden.

Die Vorteile der Erfindung liegen somit insbesondere darin, dass über das Mischventil der Kreislauf der Flüssigkeit im hydraulischen System an den jeweiligen aktuellen Betriebszustand, insbesondere die jeweilige aktuelle Heizlast, der ersten und/oder der zweiten Heizungs- und/oder Warmwasserbereitungseinrichtung angepasst und damit die Wärmepumpenheizung energieeffizient betrieben werden kann. Hierbei kann beispielsweise auch berücksichtigt werden, dass eine der Heizungs- und/oder Warmwasserbereitungseinrichtungen, beispielsweise die erste Heizungs- und/oder Warmwasserbereitungseinrichtung, ausgeschaltet ist, da sie möglicherweise gerade nicht benötigt wird. Ebenso kann der aktuelle Wärmebedarf der ersten und/oder der zweiten Heizungs- und/oder Warmwasserbereitungseinrichtung berücksichtigt werden.

Eine Weiterbildung der Erfindung sieht vor, dass das Mischventil mindestens vier Anschlüsse (vier Wege) aufweist. Insbesondere handelt es sich bei dem Mischventil um ein Vier-Wege-Ventil. Der erste Anschluss ist mit dem Vorlauf der zweiten Heizungs- und/oder Warmwasserbereitungseinrichtung verbunden, vorzugsweise über ein erstes Rückschlagventil und eine dritte Pumpe. Der zweite Anschluss ist mit dem Rücklauf der zweiten Heizungs- und/oder Warmwasserbereitungseinrichtung verbunden. Der dritte Anschluss ist mit dem Rücklauf der ersten Heizungs- und/oder Warmwasserbereitungseinrichtung und, vorzugsweise über ein zweites Rückschlagventil, mit einem oberen Auslass der zweiten hydraulischen Weiche verbunden. Der vierte Anschluss ist mit einem oberen Auslass der ersten hydraulischen Weiche verbunden.

Ein oberer Auslass der ersten bzw. der zweiten hydraulischen Weiche ist ein Auslass im oberen Bereich der hydraulischen Weiche. Dort ist die Temperatur der Flüssigkeit aufgrund der Schwerkraftschichtung in der jeweiligen hydraulischen Weiche höher als in einem unteren Bereich derselben hydraulischen Weiche. In diesem unteren Bereich der jeweiligen hydraulischen Weiche kann ein unterer Einlass der jeweiligen hydraulischen Weiche angeordnet sein. Über den unteren Einlass wird der hydraulischen Weiche üblicherweise kühlere Flüssigkeit aus dem Rücklauf der Heizungs- und/oder Warmwasserbereitungseinrichtung zugeführt, aus dem oberen Auslass wird der hydraulischen Weiche üblicherweise wärmere Flüssigkeit für den Vorlauf der Heizungs- und/oder Warmwasserbereitungseinrichtung entnommen. In der hydraulischen Weiche wird die Flüssigkeit über den Flüssigkeitskreislauf mit dem jeweils zugeordneten Wärmetauscher erwärmt.

Eine Weiterbildung der Erfindung sieht vor, dass der oder ein weiterer oberer Auslass der ersten hydraulischen Weiche mit dem Vorlauf der ersten Heizungs- und/oder Warmwasserbereitungseinrichtung verbunden ist, vorzugsweise über ein drittes Rückschlagventil und/oder eine vierte Pumpe. Alternativ oder additiv ist vorgesehen, dass der Rücklauf der ersten Heizungs- und/oder Warmwasserbereitungseinrichtung auch mit einem unteren Einlass der zweiten hydraulischen Weiche verbunden ist, vorzugsweise über ein viertes Rückschlagventil. Alternativ oder additiv ist vorgesehen, dass der oder ein weiterer oberer Auslass der zweiten hydraulischen Weiche auch mit einem unteren Einlass der ersten hydraulischen Weiche verbunden ist. Alternativ oder additiv ist vorgesehen, dass der Rücklauf der zweiten Heizungs- und/oder Warmwasserbereitungseinrichtung auch mit dem unteren Einlass der zweiten hydraulischen Weiche verbunden ist.

Zweckmäßigerweise werden die vorgenannten Verbindungen über jeweils eine oder mehrere Flüssigkeitsleitungen verwirklicht.

Mittels der dritten und vierten Pumpe wird der Flüssigkeits-Volumenstrom durch die jeweils zugeordnete Heizungs- und/oder Warmwasserbereitungseinrichtung eingestellt, insbesondere angepasst an die jeweils aktuelle Heizlast. Bei der dritten und vierten Pumpe handelt es sich somit um Umwälzpumpen, deren Drehzahl einstellbar, insbesondere regelbar ist. Vorzugsweise handelt es sich um selbstregelnde Hocheffizienzpumpen.

Die Rückschlagventile öffnen und schließen in Abhängigkeit von der Einstellung des Mischventils und/oder den sich aufgrund der aktuellen Heizlast und der entsprechend eingestellten bzw. geregelten Drehzahl der dritten und vierten Pumpe jeweils ergebenden Volumenströmen. Überschreitet der von der dritten bzw. vierten Pumpe ausgehende Druck (auch Saugdruck) in der Flüssigkeit einen Grenzwert und hat dies einen Volumenstrom in Durchflussrichtung des Rückschlagventils zur Folge, so öffnet das Rückschlagventil und gibt damit die zugeordnete Flüssigkeitsleitung frei.

Eine Weiterbildung der erfindungsgemäßen Wärmepumpenheizung sieht vor, dass der erste Anschluss des Mischventils immer geöffnet ist und der zweite und der dritte und der vierte Anschluss geöffnet und geschlossen werden können.

Die Wärmepumpenheizung kann folgende Zustände einnehmen:
In einem ersten Zustand der Wärmepumpenheizung ist der zweite Anschluss zumindest teilweise geöffnet und der dritte und der vierte Anschluss sind geschlossen, und ferner ist die dritte Pumpe angeschaltet und die vierte Pumpe ausgeschaltet. Dieser erste Zustand ist insbesondere bestimmt für einen gesättigten Betrieb der zweiten Heizungs- und/oder Warmwasserbereitungseinrichtung bei ausgeschalteter erster Heizungs- und/oder Warmwasserbereitungseinrichtung. Die zweite Heizungs- und/oder Warmwasserbereitungseinrichtung befindet sich somit in einem gesättigten Zustand, sie hat keinen weiteren Wärmebedarf oder allenfalls einen vergleichsweise sehr geringen Wärmebedarf.

In einem zweiten Zustand der Wärmepumpenheizung ist der zweite Anschluss zumindest teilweise geöffnet und der dritte und der vierte Anschluss sind geschlossen, und ferner sind die dritte Pumpe und die vierte Pumpe angeschaltet. Dieser zweite Zustand ist insbesondere bestimmt für einen gesättigten Betrieb der zweiten Heizungs- und/oder Warmwasserbereitungseinrichtung bei eingeschalteter erster Heizungs- und/oder Warmwasserbereitungseinrichtung.

In einem dritten Zustand der Wärmepumpenheizung sind der zweite Anschluss und der dritte Anschluss zumindest teilweise geöffnet und der vierte Anschluss ist geschlossen, und ferner ist die dritte Pumpe angeschaltet und die vierte Pumpe ist ausgeschaltet. Dieser dritte Zustand ist insbesondere bestimmt für einen Betrieb der zweiten Heizungs- und/oder Warmwasserbereitungseinrichtung mit geringer Last bei ausgeschalteter erster Heizungs- und/oder Warmwasserbereitungseinrichtung. Die zweite Heizungs- und/oder Warmwasserbereitungseinrichtung befindet sich somit in einem Zustand geringer Last, sie hat einen vergleichsweise geringen Wärmebedarf.

In einem vierten Zustand der Wärmepumpenheizung sind der zweite Anschluss und der dritte Anschluss zumindest teilweise geöffnet und der vierte Anschluss ist geschlossen, und ferner sind die dritte Pumpe und die vierte Pumpe angeschaltet. Dieser vierte Zustand ist insbesondere bestimmt für einen Betrieb der zweiten Heizungs- und/oder Warmwasserbereitungseinrichtung mit geringer Last bei eingeschalteter erster Heizungs- und/oder Warmwasserbereitungseinrichtung.

In einem fünften Zustand der Wärmepumpenheizung sind wie im vierten Zustand der zweite Anschluss und der dritte Anschluss zumindest teilweise geöffnet und der vierte Anschluss ist geschlossen ist, und ferner sind wiederum die dritte Pumpe und die vierte Pumpe angeschaltet. Die vierte Pumpe wird jedoch mit höherer Drehzahl betrieben als im vierten Zustand. Dieser fünfte Zustand ist insbesondere bestimmt für einen Betrieb der zweiten Heizungs- und/oder Warmwasserbereitungseinrichtung mit geringer Last bei eingeschalteter erster Heizungs- und/oder Warmwasserbereitungseinrichtung, wobei die erste Heizungs- und/oder Warmwasserbereitungseinrichtung mit höherer Last als im vierten Zustand betrieben wird.

In einem sechsten Zustand der Wärmepumpenheizung sind wie im vierten Zustand der zweite Anschluss und der dritte Anschluss zumindest teilweise geöffnet und der vierte Anschluss ist geschlossen, und ferner sind wiederum die dritte Pumpe und die vierte Pumpe angeschaltet. Die vierte Pumpe wird jedoch mit höherer Drehzahl betrieben als im vierten Zustand und auch die vierte Pumpe wird mit höherer Drehzahl betrieben als im vierten Zustand. Dieser sechste Zustand ist insbesondere bestimmt für einen Betrieb der zweiten Heizungs- und/oder Warmwasserbereitungseinrichtung mit höherer Last bei eingeschalteter erster Heizungs- und/oder Warmwasserbereitungseinrichtung, wobei die erste Heizungs- und/oder Warmwasserbereitungseinrichtung mit höherer Last als im vierten Zustand betrieben wird.

In einem siebten Zustand der Wärmepumpenheizung ist der dritte Anschluss zumindest teilweise geöffnet und der zweite und vierte Anschluss sind geschlossen, und ferner ist die dritte Pumpe angeschaltet und die vierte Pumpe ist ausgeschaltet. Dieser siebte Zustand ist insbesondere bestimmt für einen Betrieb der zweiten Heizungs- und/oder Warmwasserbereitungseinrichtung mit mittlerer Last bei ausgeschalteter erster Heizungs- und/oder Warmwasserbereitungseinrichtung. Die zweite Heizungs- und/oder Warmwasserbereitungseinrichtung befindet sich somit in einem Zustand mittlerer Last, sie hat einen vergleichsweise mittleren Wärmebedarf.

In einem achten Zustand der Wärmepumpenheizung ist der dritte Anschluss zumindest teilweise geöffnet und der zweite und vierte Anschluss sind geschlossen, und ferner sind die dritte Pumpe und die vierte Pumpe angeschaltet. Dieser achte Zustand ist insbesondere bestimmt für einen Betrieb der zweiten Heizungs- und/oder Warmwasserbereitungseinrichtung mit mittlerer Last bei eingeschalteter erster Heizungs- und/oder Warmwasserbereitungseinrichtung.

In einem neunten Zustand der Wärmepumpenheizung sind der dritte Anschluss und der vierte Anschluss zumindest teilweise geöffnet und der zweite Anschluss ist geschlossen, und ferner ist die dritte Pumpe angeschaltet und die vierte Pumpe ist ausgeschaltet. Dieser neunte Zustand ist insbesondere bestimmt für einen Betrieb der zweiten Heizungs- und/oder Warmwasserbereitungseinrichtung mit höherer Last bei ausgeschalteter erster Heizungs- und/oder Warmwasserbereitungseinrichtung. Die zweite Heizungs- und/oder Warmwasserbereitungseinrichtung befindet sich somit in einem Zustand höherer Last, sie hat einen vergleichsweise höheren Wärmebedarf.

In einem zehnten Zustand der Wärmepumpenheizung sind der dritte Anschluss und der vierte Anschluss zumindest teilweise geöffnet und der zweite Anschluss ist geschlossen, und ferner sind die dritte Pumpe und die vierte Pumpe angeschaltet. Dieser zehnte Zustand ist insbesondere bestimmt für einen Betrieb der zweiten Heizungs- und/oder Warmwasserbereitungseinrichtung mit höherer Last bei eingeschalteter erster Heizungs- und/oder Warmwasserbereitungseinrichtung.

In einem elften Zustand der Wärmepumpenheizung sind der dritte Anschluss und der vierte Anschluss wie im zehnten Zustand zumindest teilweise geöffnet sind und der zweite Anschluss ist geschlossen ist, und ferner sind wiederum die dritte Pumpe und die vierte Pumpe angeschaltet. Die vierte Pumpe wird jedoch mit höherer Drehzahl betrieben als im zehnten Zustand. Dieser elfte Zustand ist insbesondere bestimmt für einen Betrieb der zweiten Heizungs- und/oder Warmwasserbereitungseinrichtung mit höherer Last bei eingeschalteter erster Heizungs- und/oder Warmwasserbereitungseinrichtung, wobei die erste Heizungs- und/oder Warmwasserbereitungseinrichtung mit höherer Last als im zehnten Zustand betrieben wird.

In einem zwölften Zustand der Wärmepumpenheizung sind der dritte Anschluss und der vierte Anschluss wie im zehnten zumindest teilweise geöffnet und der zweite Anschluss ist geschlossen ist, und ferner sind wiederum die dritte Pumpe und die vierte Pumpe angeschaltet. Die dritte Pumpe wird jedoch mit höherer Drehzahl betrieben als im zehnten Zustand. Dieser zwölfte Zustand ist insbesondere bestimmt für einen Betrieb der zweiten Heizungs- und/oder Warmwasserbereitungseinrichtung mit sehr hoher Last bei eingeschalteter erster Heizungs- und/oder Warmwasserbereitungseinrichtung.

In einem dreizehnten Zustand der Wärmepumpenheizung ist der vierte Anschluss zumindest teilweise geöffnet und der zweite Anschluss und der dritte Anschluss sind geschlossen, und ferner ist die dritte Pumpe angeschaltet und die vierte Pumpe ist ausgeschaltet. Dieser dreizehnte Zustand ist insbesondere bestimmt für einen Betrieb der zweiten Heizungs- und/oder Warmwasserbereitungseinrichtung mit Volllast bei ausgeschalteter erster Heizungs- und/oder Warmwasserbereitungseinrichtung. Die zweite Heizungs- und/oder Warmwasserbereitungseinrichtung befindet sich somit in einem Volllast-Zustand, sie hat einen vergleichsweise sehr hohen Wärmebedarf.

In einem vierzehnten Zustand der Wärmepumpenheizung ist der vierte Anschluss zumindest teilweise geöffnet und der zweite Anschluss und der dritte Anschluss sind geschlossen, und ferner sind die dritte Pumpe und die vierte Pumpe angeschaltet. Dieser vierzehnte Zustand ist insbesondere bestimmt für einen Betrieb der zweiten Heizungs- und/oder Warmwasserbereitungseinrichtung mit Volllast bei eingeschalteter erster Heizungs- und/oder Warmwasserbereitungseinrichtung.

Eine Weiterbildung der erfindungsgemäßen Wärmepumpenheizung sieht eine Steuereinrichtung zur Einstellung des Mischventils in Abhängigkeit von der aktuellen Wärmelast der ersten Heizungs- und/oder Warmwasserbereitungseinrichtung und/oder der zweiten Heizungs- und/oder Warmwasserbereitungseinrichtung vor. Diese Weiterbildung ermöglicht eine automatische Einstellung oder Regelung des Zustands der Wärmepumpenheizung.

Weiter kann vorgesehen sein, dass zur Ermittlung der aktuellen Wärmelast der ersten Heizungs- und/oder Warmwasserbereitungseinrichtung Temperatursensoren zur Bestimmung der Vorlauftemperatur und/oder der Rücklauftemperatur der ersten Heizungs- und/oder Warmwasserbereitungseinrichtung vorgesehen sind. Alternativ oder additiv können zur Ermittlung der aktuellen Wärmelast der zweiten Heizungs- und/oder Warmwasserbereitungseinrichtung Temperatursensoren zur Bestimmung der Vorlauftemperatur und/oder der Rücklauftemperatur der zweiten Heizungs- und/oder Warmwasserbereitungseinrichtung vorgesehen sein.

Das erfindungsgemäße Verfahren ist bestimmt zum Betreiben einer erfindungsgemäßen Wärmepumpenheizung. Das Verfahren sieht vor, dass die aktuelle Wärmelast der ersten Heizungs- und/oder Warmwasserbereitungseinrichtung und/oder die aktuelle Wärmelast der zweiten Heizungs- und/oder Warmwasserbereitungseinrichtung ermittelt und anhand des Ergebnisses dieser Ermittlung das Mischventils des hydraulischen Systems der Wärmepumpenheizung eingestellt wird.

Eine Weiterbildung des Verfahrens sieht vor, dass das Mischventil anhand des Ergebnisses der Ermittlung der aktuellen Wärmelast der ersten Heizungs- und/oder Warmwasserbereitungseinrichtung und/oder der zweiten Heizungs- und/oder Warmwasserbereitungseinrichtung derart eingestellt wird, dass die Wärmepumpenheizung im ersten oder im zweiten oder im dritten oder im vierten oder im fünften oder im sechsten oder im siebten oder im achten oder im neunten oder im zehnten Zustand betrieben wird.

Die Erfindung wird nachstehend auch hinsichtlich weiterer Merkmale und Vorteile anhand der Beschreibung eines Ausführungsbeispiels und unter Bezugnahme auf die beiliegenden, schematischen Zeichnungen näher erläutert. Hierbei zeigen
- FIG 1: den Aufbau eines Ausführungsbeispiels einer erfindungsgemäßen Wärmepumpenheizung,
- FIG 2 bis 15: das Ausführungsbeispiel nach FIG 1 in vierzehn verschiedenen Zuständen der Wärmepumpenheizung.

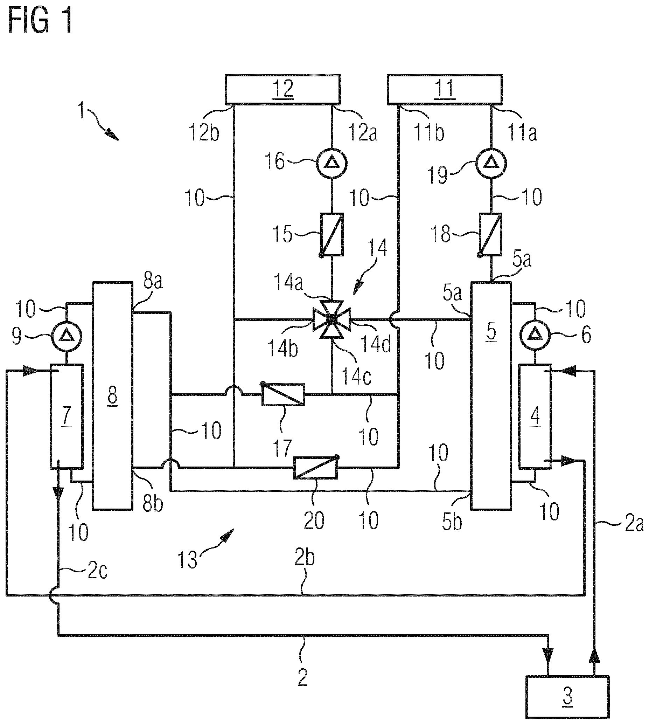

FIG 1 zeigt schematisch den Aufbau eines Ausführungsbeispiels einer Wärmepumpenheizung 1 gemäß der Erfindung. Die Wärmepumpenheizung 1 weist ein Arbeitsmedium 2 (Kältemittel) auf, das in einem geschlossenen Arbeitsmedium-Kreislauf ein Außengerät 3, beispielsweise ein Außengerät mit 4 bis 16 kW, und einen zweiteiligen Kondensator durchströmt. Weitere Komponenten des Arbeitsmedium-Kreislaufs, beispielsweise Verdampfer (in dem das flüssige Arbeitsmedium durch die Wärme der Außenluft verdampft wird), Kompressor (Verdichter, in dem das gasförmige Arbeitsmedium komprimiert wird) und Expansionsventil (durch das das flüssige Arbeitsmedium entspannt wird), sind nicht einzeln dargestellt.

Aufgabe des Kondensators ist die Verflüssigung des gasförmigen Arbeitsmediums 2. Dieser Kompressor ist, wie bereits angesprochen, zweiteilige aufgebaut. Er weist einen ersten Wärmetauscher 4 und einen zweiten Wärmetauscher 7 auf, die nacheinander an ihrer jeweiligen Primärseite vom Arbeitsmedium 2 durchströmt werden, wobei der erste Wärmetauscher 4 hinsichtlich des Arbeitsmediums 2 stromaufwärts zum zweiten Wärmetauscher 7 angeordnet ist. An ihrer Sekundärseite werden beide Wärmetauscher 4, 7 von einer Flüssigkeit 10, beispielsweise Wasser, durchströmt.

Vom Außengerät 3 wird das üblicherweise bei dieser Überleitung als Heißgas 2a vorliegende Arbeitsmedium 2 an den ersten Wärmetauscher 4 geleitet. Vom ersten Wärmetauscher 4 wird das üblicherweise bei dieser Überleitung als Heißgas/Kondensat-Gemisch 2b vorliegende Arbeitsmedium 2 an den zweiten Wärmetauscher 7 geleitet. Vom zweiten Wärmetauscher 7 wird das üblicherweise bei dieser Überleitung als Kondensat 2c vorliegende Arbeitsmedium 2 wieder zurück an das Außengerät 3 geleitet.

Der erste Wärmetauscher 4 und der zweite Wärmetauscher 7 sind dazu ausgebildet, Energie vom Arbeitsmedium 2 an die Flüssigkeit 10 zu übertragen und dadurch die durchströmende Flüssigkeit 10 zu erwärmen. Der erste Wärmetauscher 4 wird hierzu an seiner Sekundärseite von Flüssigkeit 10, insbesondere Wasser, durchströmt. Diese Flüssigkeit 10 wird mittels einer ersten Pumpe 6 im Kreislauf durch eine erste hydraulische Weiche 5 geführt. Auch der zweite Wärmetauscher 7 wird an seiner Sekundärseite von Flüssigkeit 10, insbesondere Wasser, durchströmt, die mittels einer zweiten Pumpe 9 im Kreislauf durch eine zweite hydraulische Weiche 8 geführt wird. Die Wärmepumpenheizung 1 ist so ausgelegt, dass die Flüssigkeit 10 in der ersten hydraulischen Weiche 5 eine höhere Temperatur aufweist als die Flüssigkeit 10 in der zweiten hydraulischen Weiche 8. Beispielsweise kann in der ersten hydraulischen Weiche 5 eine Temperatur von etwa 60°C und in der zweiten hydraulischen Weiche 8 eine Temperatur von etwa 45°C vorgesehen sein, wobei sich in beiden hydraulischen Weichen 5, 8 jeweils aufgrund der Schwerkraft eine Temperaturschichtung ergibt, das heißt im oberen Bereich können beispielsweise jeweils die vorstehende angegebenen Temperaturwerte vorliegen, im unteren Bereich kann die Temperatur der Flüssigkeit 10 jedoch beispielsweise um etwa 5°C niedriger liegen.

Ferner weist die Wärmepumpenheizung 1 eine erste Heizungs- und/oder Warmwasserbereitungseinrichtung 11 auf, beispielsweise einen oder mehrere Heizkörper und/oder einen Warmwasserspeicher und/oder einen Durchlauferhitzer. Außerdem ist eine zweite Heizungs- und/oder Warmwasserbereitungseinrichtung 12, beispielsweise eine Fußbodenheizung, vorgesehen. Hierbei ist die erste Heizungs- und/oder Warmwasserbereitungseinrichtung 11 für höhere Vorlauftemperaturen bestimmt als die zweite Heizungs- und/oder Warmwasserbereitungseinrichtung 12.

Weiter umfasst die Wärmepumpenheizung 1 ein hydraulisches System 13 gefüllt mit Flüssigkeit 10, die das hydraulische System 13 durchströmt. Bei der Flüssigkeit 10 handelt es sich beispielsweise um Wasser. Das hydraulische System 13 verbindet die erste Heizungs- und/oder Warmwasserbereitungseinrichtung 11 und die zweite Heizungs- und/oder Warmwasserbereitungseinrichtung 12 und die erste hydraulische Weiche 5 und die zweite hydraulische Weiche 8 hydraulisch miteinander, beispielsweise über Flüssigkeitsleitungen.

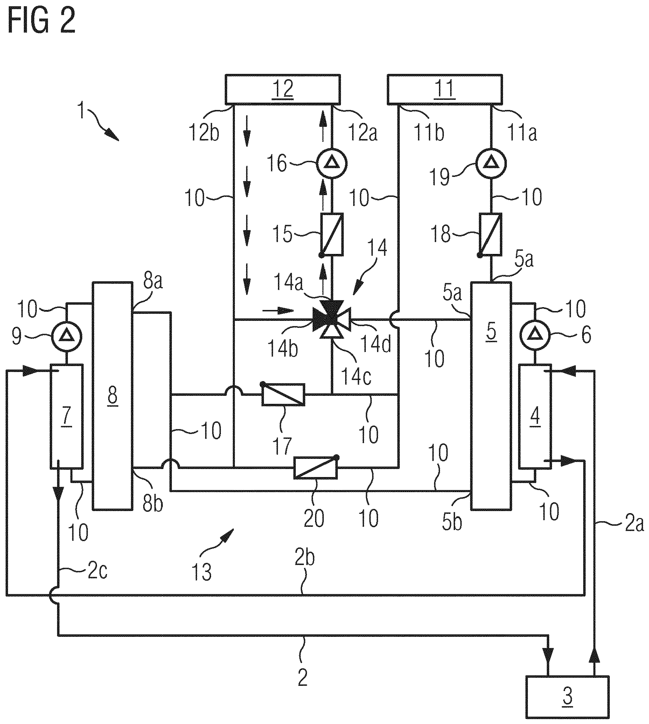

Das hydraulische System 13 weist ein Mischventil 14, insbesondere ein motorisch betriebenes Mischventil 14, zur Änderung und/oder Einstellung des hydraulischen Systems 13 in Abhängigkeit von der aktuellen Wärmelast der ersten Heizungs- und/oder Warmwasserbereitungseinrichtung 11 und/oder der zweiten Heizungs- und/oder Warmwasserbereitungseinrichtung 12 auf. Durch entsprechendes Einstellen des Mischventils 14 kann die Wärmepumpenheizung 1 verschiedene, nachfolgend anhand von FIG 2 bis FIG 15 näher beschriebene Zustände einnehmen.

Das Mischventil 14 ist ein Vier-Wege-Ventil mit vier Anschlüssen 14a, 14b, 14c, 14d. Der erste Anschluss 14a ist über ein erstes Rückschlagventil 15 und eine dritte Pumpe 16 mit dem Vorlauf 12a der zweiten Heizungs- und/oder Warmwasserbereitungseinrichtung 12 verbunden. Der zweite Anschluss 14b ist mit dem Rücklauf 12b der zweiten Heizungs- und/oder Warmwasserbereitungseinrichtung 12 verbunden. Der dritte Anschluss 14c ist mit dem Rücklauf 11b der ersten Heizungs- und/oder Warmwasserbereitungseinrichtung 11 und über ein zweites Rückschlagventil 17 mit einem oberen Auslass 8a der zweiten hydraulischen Weiche 8 verbunden. Der vierte Anschluss 14d ist mit einem oberen Auslass 5a der ersten hydraulischen Weiche 5 verbunden.

Ferner ist ein weiterer oberer Auslass 5a der ersten hydraulischen Weiche 5 über ein drittes Rückschlagventil 18 und eine vierte Pumpe 19 mit dem Vorlauf 11a der ersten Heizungs- und/oder Warmwasserbereitungseinrichtung 11 verbunden. Der Rücklauf 11b der ersten Heizungs- und/oder Warmwasserbereitungseinrichtung 11 ist über ein viertes Rückschlagventil 20 auch mit einem unteren Einlass 8b der zweiten hydraulischen Weiche 8 verbunden. Der obere Auslass 8a der zweiten hydraulischen Weiche 8 ist auch mit einem unteren Einlass 5b der ersten hydraulischen Weiche 5 verbunden. Der Rücklauf 12b der zweiten Heizungs- und/oder Warmwasserbereitungseinrichtung 12 ist auch mit dem unteren Einlass 8b der zweiten hydraulischen Weiche 8 verbunden.

Die Wärmepumpenheizung 1 kann ferner eine Steuereinrichtung (nicht dargestellt) zur Einstellung des Mischventils 14 in Abhängigkeit von der aktuellen Heizlast der ersten Heizungs- und/oder Warmwasserbereitungseinrichtung 11 und/oder der zweiten Heizungs- und/oder Warmwasserbereitungseinrichtung 12 aufweisen. Ferner können zur Ermittlung der aktuellen Heizlast der ersten Heizungs- und/oder Warmwasserbereitungseinrichtung 11 Temperatursensoren (nicht dargestellt) zur Bestimmung der Vorlauftemperatur und/oder der Rücklauftemperatur der ersten Heizungs- und/oder Warmwasserbereitungseinrichtung 11 vorgesehen sein. Weiter können zur Ermittlung der aktuellen Heizlast der zweiten Heizungs- und/oder Warmwasserbereitungseinrichtung 12 Temperatursensoren (nicht dargestellt) zur Bestimmung der Vorlauftemperatur und/oder der Rücklauftemperatur der zweiten Heizungs- und/oder Warmwasserbereitungseinrichtung 12 vorgesehen sein. Die Messdaten der Temperatursensoren können an die bereits erwähnte Steuereinrichtung weitergegeben werden, die heraus die aktuelle Heizlast der jeweiligen Heizungs- und/oder Warmwasserbereitungseinrichtung ermittelt und auf dieser Basis das Mischventil 14 einstellt, so dass die Wärmepumpenheizung 1 einen an die aktuellen Gegebenheiten angepassten Zustand einnimmt.

Nachfolgend sind anhand von FIG 2 bis FIG 15 vierzehn verschiedenen Zustände der Wärmepumpenheizung 1 beschrieben. Allen Zuständen ist gemeinsam, dass der erste Anschluss 14a des Mischventils 14 immer geöffnet ist. Der zweite Anschluss 14b, der dritte Anschluss 14c und der vierte Anschluss 14d können hingegen geöffnet und geschlossen werden. Das sollständige Öffnen eines Anschlusses ist durch vollständiges Ausfüllen der entsprechenden Fläche in der Symboldarstellung des Mischventils 14 dargestellt, das teilweise Öffnen durch hälftiges Ausfüllen der entsprechenden Fläche. Eine nicht ausgefüllte Fläche symbolisiert, dass der entsprechende Anschluss geschlossen ist.

Ferner ist allen Zuständen gemeinsam, dass die dritte Pumpe 16 eingeschaltet ist, das heißt die zweite Heizungs- und/oder Warmwasserbereitungseinrichtung 12, beispielsweise eine Fußbodenheizung, ist in Betrieb.

Die sich im jeweiligen Zustand ergebenen Strömungen der Flüssigkeit 10 im hydraulischen System 13 sind jeweils durch Pfeile an den Flüssigkeitsleitungen in den Figuren verdeutlicht.

FIG 2 zeigt einen ersten Zustand der Wärmepumpenheizung 1. Der zweite Anschluss 14b ist geöffnet, der dritte Anschluss 14c und der vierte Anschluss 14d sind geschlossen. Die vierte Pumpe 19 ist ausgeschaltet, das heißt die erste Heizungs- und/oder Warmwasserbereitungseinrichtung 11 ist nicht in Betrieb. Im ersten Zustand liegt ein gesättigter Betrieb der zweiten Heizungs- und/oder Warmwasserbereitungseinrichtung 12 vor. Dementsprechend muss der durch die zweite Heizungs- und/oder Warmwasserbereitungseinrichtung 12 strömenden Flüssigkeit 10 keine Wärme zugeführt werden. Somit kann die Wärmepumpe im ersten Zustand ausgeschaltet sein. Die Flüssigkeit 10 wird nur durch die zweite Heizungs- und/oder Warmwasserbereitungseinrichtung 12 geführt und der Kreislauf über das Mischventil 14 geschlossen.

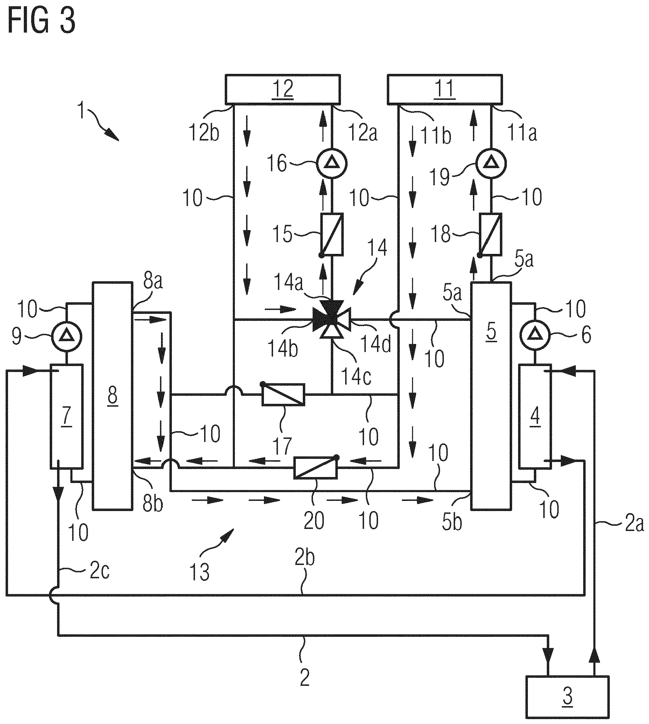

FIG 3 zeigt einen zweiten Zustand der Wärmepumpenheizung 1. Wie beim ersten Zustand ist der zweite Anschluss 14b geöffnet, der dritte Anschluss 14c und der vierte Anschluss 14d sind geschlossen. Im Unterschied zum ersten Zustand ist die vierte Pumpe 19 angeschaltet, das heißt die erste Heizungs- und/oder Warmwasserbereitungseinrichtung 11 ist - anders als im ersten Zustand - eingeschaltet. Wie im ersten Zustand liegt ein gesättigter Betrieb der zweiten Heizungs- und/oder Warmwasserbereitungseinrichtung 12 vor. Aufgrund der eingeschalteten ersten Heizungs- und/oder Warmwasserbereitungseinrichtung 11 muss jedoch im zweiten Zustand die Wärmepumpe eingeschaltet sein. Die Flüssigkeit 10 wird in zwei Kreisläufen geführt. Ein Kreislauf verläuft durch die zweite Heizungs- und/oder Warmwasserbereitungseinrichtung 12 und ist über das Mischventil 14 geschlossen. Ein weiterer Kreislauf verläuft durch die erste Heizungs- und/oder Warmwasserbereitungseinrichtung 11 und ist über die zweite hydraulische Weiche 8 und die erste hydraulische Weiche 5 geschlossen.

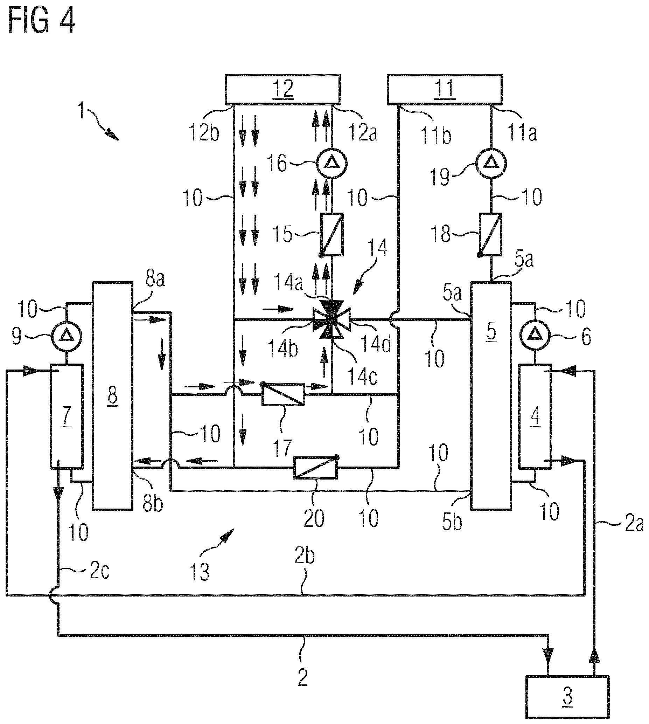

FIG 4 zeigt einen dritten Zustand der Wärmepumpenheizung 1. Der zweite Anschluss 14b und der dritte Anschluss 14c sind teilweise geöffnet und der vierte Anschluss 14d ist geschlossen. Die vierte Pumpe 19 ist ausgeschaltet, das heißt die erste Heizungs- und/oder Warmwasserbereitungseinrichtung 11 ist nicht in Betrieb. Im vierten Zustand liegt ein Betrieb der zweiten Heizungs- und/oder Warmwasserbereitungseinrichtung 12 mit geringer Last vor. Dementsprechend muss der durch die zweite Heizungs- und/oder Warmwasserbereitungseinrichtung 12 strömenden Flüssigkeit 10 nur eine geringe Wärme zugeführt werden, so dass eine Wärmezuführung über den zweiten Speicher 8 mit der im Vergleich zum ersten Speicher 5 niedrigeren Temperatur ausreichend ist. Die Wärmepumpe muss in diesem Fall eingeschaltet sein, allerdings ist ein Betrieb mit geringer Leistung bzw. geringer Drehzahl ausreichend. Die Flüssigkeit 10 wird nur durch die zweite Heizungs- und/oder Warmwasserbereitungseinrichtung 12 geführt und der Kreislauf zum einen über das Mischventil 14 und zum anderen über den zweiten Speicher 8 geschlossen, wobei die beiden Teilströme im Mischventil 14 zusammengeführt und anschließend an die zweite Heizungs- und/oder Warmwasserbereitungseinrichtung 12 weitergeführt werden.

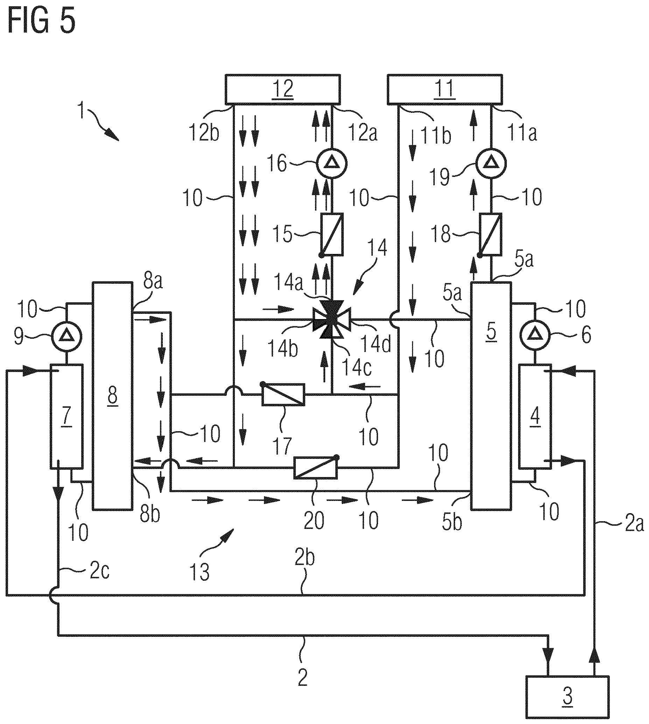

FIG 5 zeigt einen vierten Zustand der Wärmepumpenheizung 1. Wie beim dritten Zustand sind der zweite Anschluss 14b und der dritte Anschluss 14c teilweise geöffnet, der vierte Anschluss 14d ist geschlossen. Im Unterschied zum dritten Zustand ist die vierte Pumpe 19 angeschaltet, das heißt die erste Heizungs- und/oder Warmwasserbereitungseinrichtung 11 ist - anders als im dritten Zustand - eingeschaltet. Wie im dritten Zustand liegt ein Betrieb der zweiten Heizungs- und/oder Warmwasserbereitungseinrichtung 12 mit geringer Last vor. Die Wärmepumpe ist eingeschaltet. Die Flüssigkeit 10 wird zum einen durch die zweite Heizungs- und/oder Warmwasserbereitungseinrichtung 12 und im Kreislauf durch das Mischventil 14 geführt und zum anderen ausgehend von der ersten Heizungs- und/oder Warmwasserbereitungseinrichtung 11 über das Mischventil 14 und die zweite Heizungs- und/oder Warmwasserbereitungseinrichtung 12 und die zweite hydraulische Weiche 8 zur ersten hydraulischen Weiche 5 und von dort zurück zur ersten Heizungs- und/oder Warmwasserbereitungseinrichtung 11.

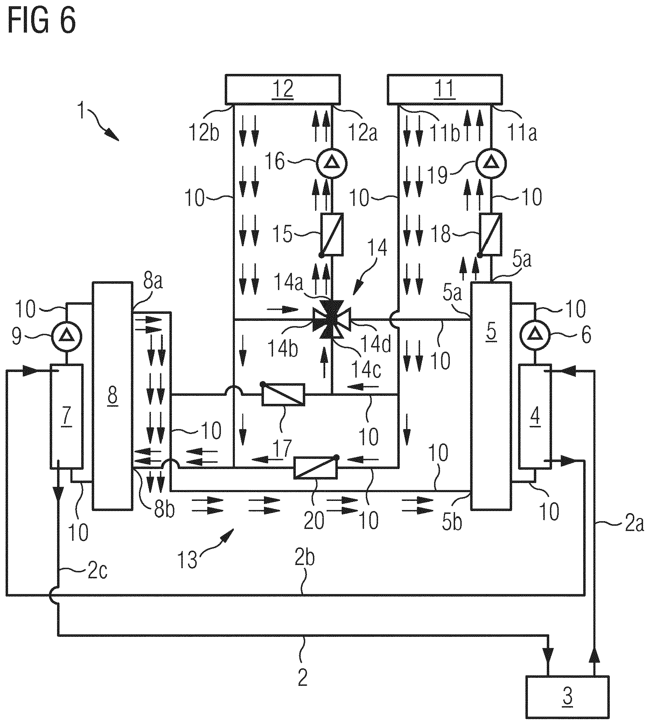

FIG 6 zeigt einen fünften Zustand der Wärmepumpenheizung 1. Wie beim vierten Zustand sind der zweite Anschluss 14b und der dritte Anschluss 14c teilweise geöffnet, der vierte Anschluss 14d ist geschlossen. Ferner ist wiederum auch die vierte Pumpe 19 angeschaltet, das heißt die erste Heizungs- und/oder Warmwasserbereitungseinrichtung 11 ist eingeschaltet. Im Unterschied zum vierten Zustand wird jedoch die vierte Pumpe 19 mit höherer Drehzahl als im vierten Zustand und damit die erste Heizungs- und Warmwasserbereitungseinrichtung 11 mit höherer Last als im vierten Zustand betrieben. Wie im vierten Zustand liegt ein Betrieb der zweiten Heizungs- und/oder Warmwasserbereitungseinrichtung 12 mit geringer Last vor. Die Wärmepumpe ist eingeschaltet. Die Flüssigkeit 10 wird zum einen durch die zweite Heizungs- und/oder Warmwasserbereitungseinrichtung 12 und im Kreislauf durch das Mischventil 14 geführt und zum anderen ausgehend von der ersten Heizungs- und/oder Warmwasserbereitungseinrichtung 11 einerseits über das Mischventil 14 und die zweite Heizungs- und/oder Warmwasserbereitungseinrichtung 12 und andererseits über das vierte Rückschlagventil 20 zur zweiten hydraulischen Weiche 8 und von dort zur ersten hydraulischen 5 und von dort zurück zur ersten Heizungs- und/oder Warmwasserbereitungseinrichtung 11 geführt.

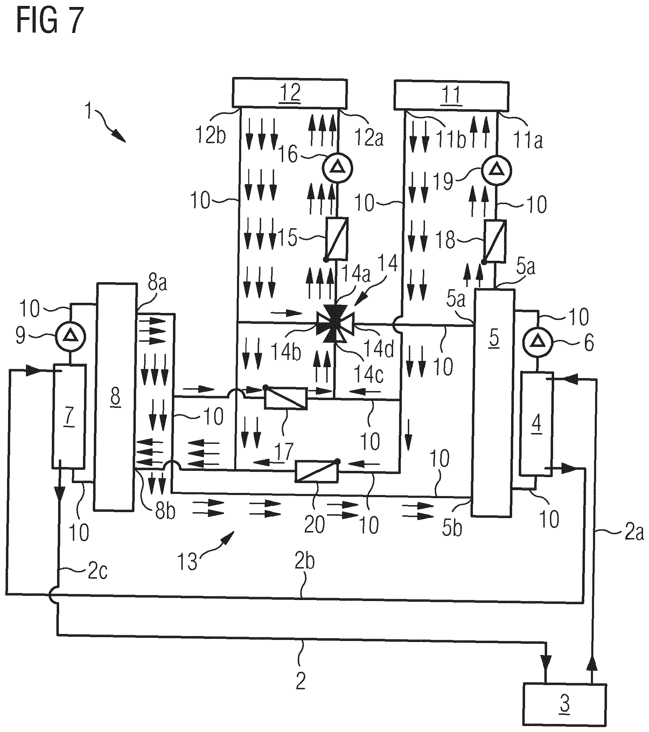

FIG 7 zeigt einen sechsten Zustand der Wärmepumpenheizung 1. Wie beim vierten Zustand sind der zweite Anschluss 14b und der dritte Anschluss 14c teilweise geöffnet, der vierte Anschluss 14d ist geschlossen. Ferner ist wiederum auch die vierte Pumpe 19 angeschaltet, das heißt die erste Heizungs- und/oder Warmwasserbereitungseinrichtung 11 ist eingeschaltet. Im Unterschied zum vierten Zustand werden jedoch die dritte Pumpe 16 und die vierte Pumpe 19 mit höherer Drehzahl als im vierten Zustand und damit die erste und die zweite Heizungs- und Warmwasserbereitungseinrichtung 11, 12 jeweils mit höherer Last als im vierten Zustand betrieben. Die Wärmepumpe ist eingeschaltet. Die Flüssigkeit 10 wird zum einen durch die zweite Heizungs- und/oder Warmwasserbereitungseinrichtung 12 und im Kreislauf durch das Mischventil 14 geführt und zum anderen ausgehend von der ersten Heizungs- und/oder Warmwasserbereitungseinrichtung 11 einerseits über das Mischventil 14 und die zweite Heizungs- und/oder Warmwasserbereitungseinrichtung 12 und andererseits über das vierte Rückschlagventil 20 zur zweiten hydraulischen Weiche 8 und von dort einerseits über das zweite Rückschlagventil 17, das Mischventil 14 und die zweite Heizungs- und/oder Warmwasserbereitungseinrichtung zurück zur zweiten hydraulischen Weiche 8 und andererseits zur ersten hydraulischen Weiche 5 und von dort zurück zur ersten Heizungs- und/oder Warmwasserbereitungseinrichtung 11 geführt.

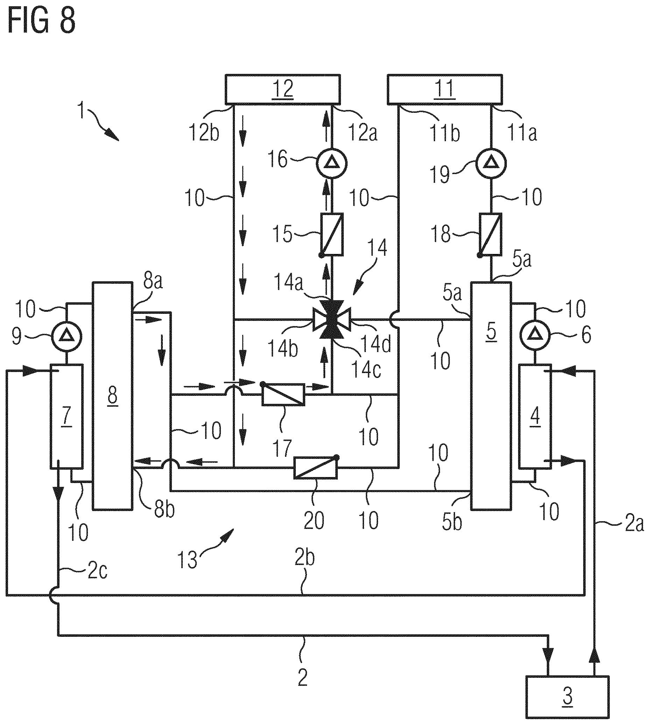

FIG 8 zeigt einen siebten Zustand der Wärmepumpenheizung 1. Der dritte Anschluss 14c ist geöffnet, der zweite Anschluss 14b und der vierte Anschluss 14d sind geschlossen. Die vierte Pumpe 19 ist ausgeschaltet, das heißt die erste Heizungs- und/oder Warmwasserbereitungseinrichtung 11 ist nicht in Betrieb. Im siebten Zustand liegt ein Betrieb der zweiten Heizungs- und/oder Warmwasserbereitungseinrichtung 12 mit mittlerer Last vor. Dementsprechend muss der durch die zweite Heizungs- und/oder Warmwasserbereitungseinrichtung 12 strömenden Flüssigkeit 10 nur eine mittlere Wärme zugeführt werden, so dass auch hier eine Wärmezuführung über die zweite hydraulische Weiche 8 mit der im Vergleich zur ersten hydraulischen Weiche 5 niedrigeren Temperatur noch ausreichend ist. Die Wärmepumpe muss in diesem Fall eingeschaltet sein. Die Flüssigkeit 10 wird nur durch die zweite Heizungs- und/oder Warmwasserbereitungseinrichtung 12 geführt und der Kreislauf - im Unterschied zum vierten Zustand - nur über die zweite hydraulische Weiche 8 und das Mischventil 14 geschlossen, so dass der gesamte Flüssigkeitsstrom und nicht nur - wie im vierten Zustand - ein Teilstrom durch die zweite hydraulische Weiche 8 geführt wird.

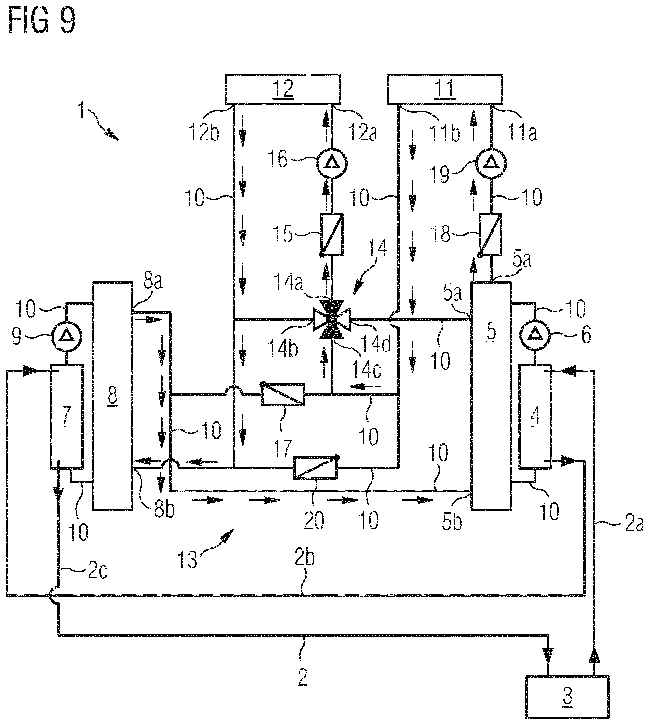

FIG 9 zeigt einen achten Zustand der Wärmepumpenheizung 1. Wie beim siebten Zustand ist der dritte Anschluss 14c geöffnet, der zweite Anschluss 14b und der vierte Anschluss 14d sind geschlossen. Im Unterschied zum siebten Zustand ist die vierte Pumpe 19 angeschaltet, das heißt die erste Heizungs- und/oder Warmwasserbereitungseinrichtung 11 ist - anders als im siebten Zustand - eingeschaltet. Wie im siebten Zustand liegt ein Betrieb der zweiten Heizungs- und/oder Warmwasserbereitungseinrichtung 12 mit mittlerer Last vor. Die Wärmepumpe ist eingeschaltet. Die Flüssigkeit 10 wird ausgehend von der ersten Heizungs- und/oder Warmwasserbereitungseinrichtung 11 durch das Mischventil 14 zur zweiten Heizungs- und/oder Warmwasserbereitungseinrichtung 12 geführt und von dort über die zweite hydraulische Weiche 8 und die erste hydraulische Weiche 5 zurück zur ersten Heizungs- und/oder Warmwasserbereitungseinrichtung 11.

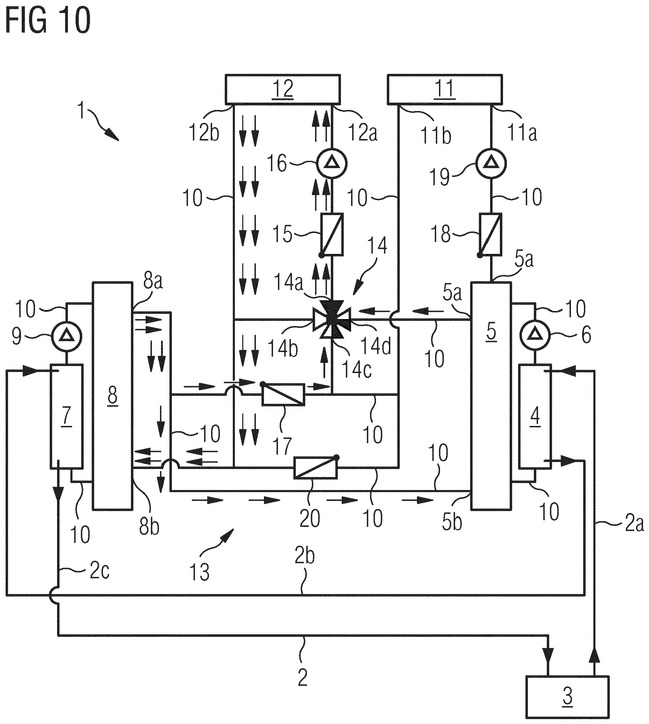

FIG 10 zeigt einen neunten Zustand der Wärmepumpenheizung 1. Der dritte Anschluss 14c und der vierte Anschluss 14d sind teilweise geöffnet, der zweite Anschluss 14b ist geschlossen. Die vierte Pumpe 19 ist ausgeschaltet, das heißt die erste Heizungs- und/oder Warmwasserbereitungseinrichtung 11 ist nicht in Betrieb. Im neunten Zustand liegt ein Betrieb der zweiten Heizungs- und/oder Warmwasserbereitungseinrichtung 12 mit höherer Last vor. Dementsprechend muss der durch die zweite Heizungs- und/oder Warmwasserbereitungseinrichtung 12 strömenden Flüssigkeit 10 eine hohe Wärme zugeführt werden, so dass eine Wärmezuführung sowohl über die zweite hydraulische Weiche 8 als auch über die erste hydraulische Weiche 5 erforderlich ist. Die Wärmepumpe muss in diesem Fall eingeschaltet sein. Die Flüssigkeit 10 wird ausgehend von der zweiten Heizungs- und/oder Warmwasserbereitungseinrichtung 12 durch die zweite hydraulische Weiche 8 geführt und anschließend in einem ersten Teilstrom zum Mischventil 14 und in einem zweiten Teilstrom über die ersten hydraulische Weiche 5 mit der höheren Temperatur zum Mischventil 14. Im Mischventil 14 werden die beiden Teilströme zusammengeführt und zurück zur zweiten Heizungs- und/oder Warmwasserbereitungseinrichtung 12 geleitet.

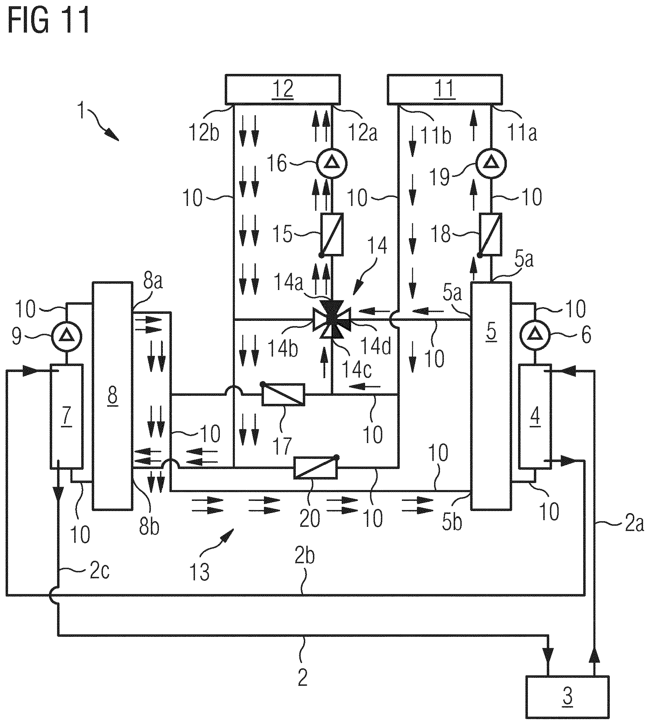

FIG 11 zeigt einen zehnten Zustand der Wärmepumpenheizung 1. Wie beim neunten Zustand sind der dritte Anschluss 14c und der vierte Anschluss 14d teilweise geöffnet, der zweite Anschluss 14b ist geschlossen. Im Unterschied zum neunten Zustand ist die vierte Pumpe 19 angeschaltet, das heißt die erste Heizungs- und/oder Warmwasserbereitungseinrichtung 11 ist - anders als im neunten Zustand - eingeschaltet. Wie im neunten Zustand liegt ein Betrieb der zweiten Heizungs- und/oder Warmwasserbereitungseinrichtung 12 mit höherer Last vor. Die Wärmepumpe ist eingeschaltet. Die Flüssigkeit 10 wird ausgehend von der zweiten Heizungs- und/oder Warmwasserbereitungseinrichtung 12 durch die zweite hydraulische Weiche 8 mit der niedrigeren Temperatur und auch vollständig durch die ersten hydraulische Weiche 5 mit der höheren Temperatur geführt. Von der ersten hydraulischen Weiche 5 wird die Flüssigkeit in einem ersten Teilstrom zum Mischventil 14 geführt und in einem zweiten Teilstrom durch die erste Heizungs- und/oder Warmwasserbereitungseinrichtung 11 zum Mischventil 14 geführt. Im Mischventil 14 werden die beiden Teilströme zusammengeführt und zurück zur zweiten Heizungs- und/oder Warmwasserbereitungseinrichtung 12 geleitet.

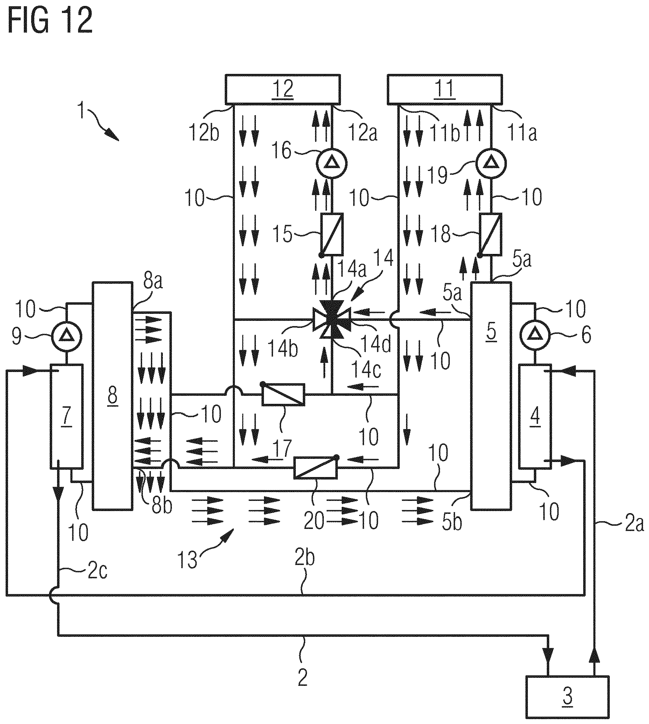

FIG 12 zeigt einen elften Zustand der Wärmepumpenheizung 1. Wie beim zehnten Zustand sind der dritte Anschluss 14c und der vierte Anschluss 14d teilweise geöffnet, der zweite Anschluss 14b ist geschlossen. Ferner ist wiederum auch die vierte Pumpe 19 angeschaltet, das heißt die erste Heizungs- und/oder Warmwasserbereitungseinrichtung 11 ist eingeschaltet. Im Unterschied zum zehnten Zustand wird jedoch die vierte Pumpe 19 mit höherer Drehzahl als im zehnten Zustand und damit die erste Heizungs- und Warmwasserbereitungseinrichtung 11 mit höherer Last als im zehnten Zustand betrieben. Wie im zehnten Zustand liegt ein Betrieb der zweiten Heizungs- und/oder Warmwasserbereitungseinrichtung 12 mit höherer Last vor. Die Wärmepumpe ist eingeschaltet. Die Flüssigkeit 10 wird ausgehend von der zweiten Heizungs- und/oder Warmwasserbereitungseinrichtung 12 durch die zweite hydraulische Weiche 8 mit der niedrigeren Temperatur und auch vollständig durch die ersten hydraulische Weiche 5 mit der höheren Temperatur geführt. Von der ersten hydraulischen Weiche 5 wird die Flüssigkeit in einem ersten Teilstrom zum Mischventil 14 und weiter zur zweiten Heizungs- und/oder Warmwasserbereitungseinrichtung 12 geführt und in einem zweiten Teilstrom einerseits durch die erste Heizungs- und/oder Warmwasserbereitungseinrichtung 11 zum Mischventil 14 und weiter zur zweiten Heizungs- und/oder Warmwasserbereitungseinrichtung 12 und andererseits über das vierte Rückschlagventil 20 zur zweiten hydraulischen Weiche 8 und weiter zur ersten hydraulischen Weiche 5 geführt.

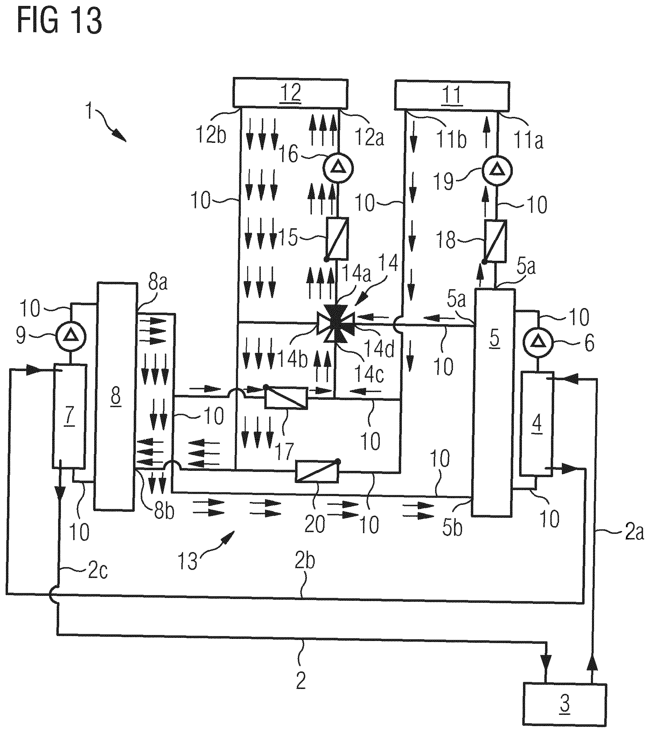

FIG 13 zeigt einen zwölften Zustand der Wärmepumpenheizung 1. Wie beim zehnten Zustand sind der dritte Anschluss 14c und der vierte Anschluss 14d teilweise geöffnet, der zweite Anschluss 14b ist geschlossen. Ferner ist wiederum auch die vierte Pumpe 19 angeschaltet, das heißt die erste Heizungs- und/oder Warmwasserbereitungseinrichtung 11 ist eingeschaltet. Im Unterschied zum zehnten Zustand wird die dritte Pumpe 16 mit höherer Drehzahl als im zehnten Zustand und damit die zweite Heizungs- und Warmwasserbereitungseinrichtung 12 mit höherer Last als im zehnten Zustand betrieben. Die Wärmepumpe ist eingeschaltet. Die Flüssigkeit 10 wird ausgehend von der zweiten Heizungs- und/oder Warmwasserbereitungseinrichtung 12 zur zweiten hydraulischen Weiche 8 mit der niedrigeren Temperatur geführt. Von dort wird die Flüssigkeit 10 in einem ersten Teilstrom über das zweite Rückschlagventil 17 zum Mischventil 14 und weiter zur zweiten Heizungs- und/oder Warmwasserbereitungseinrichtung 12 geführt. In einem zweiten Teilstrom wird die Flüssigkeit 10 von der zweiten hydraulischen Weiche 8 zur ersten hydraulischen Weiche 5 mit der höheren Temperatur und von dort einerseits zum Mischventil 14 und weiter zur zweiten Heizungs- und/oder Warmwasserbereitungseinrichtung 12 und andererseits durch die erste Heizungs- und/oder Warmwasserbereitungseinrichtung 11 ebenfalls zum Mischventil 14 und weiter zur zweiten Heizungs- und/oder Warmwasserbereitungseinrichtung 12 geführt.

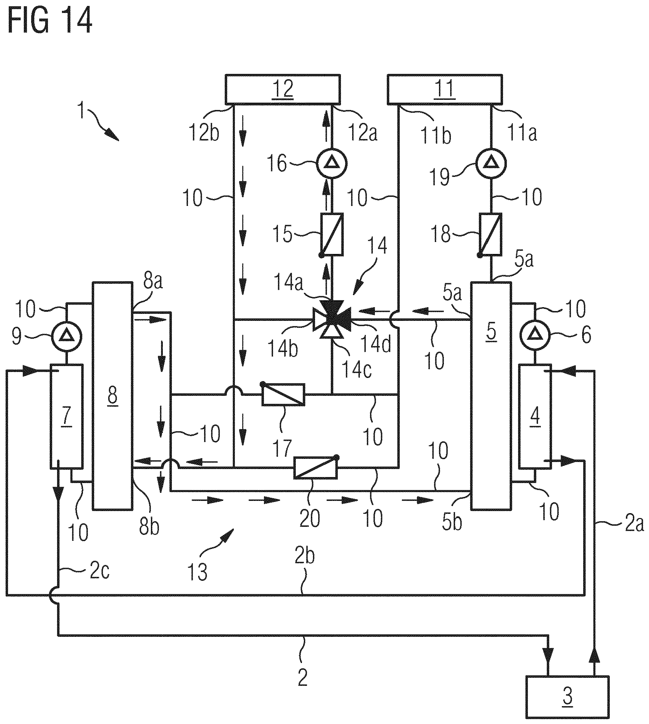

FIG 14 zeigt einen dreizehnten Zustand der Wärmepumpenheizung 1. Der vierte Anschluss 14d ist geöffnet, der zweite Anschluss 14b und der dritte Anschluss 14c sind geschlossen. Die vierte Pumpe 19 ist ausgeschaltet, das heißt die erste Heizungs- und/oder Warmwasserbereitungseinrichtung 11 ist nicht in Betrieb. Im dreizehnten Zustand liegt ein Betrieb der zweiten Heizungs- und/oder Warmwasserbereitungseinrichtung 12 mit Volllast vor. Dementsprechend muss der durch die zweite Heizungs- und/oder Warmwasserbereitungseinrichtung 12 strömenden Flüssigkeit 10 eine sehr hohe Wärme zugeführt werden, so dass eine Wärmezuführung sowohl über die zweite hydraulische Weiche 8 als auch über die erste hydraulische Weiche 5 erforderlich ist. Die Wärmepumpe muss in diesem Fall eingeschaltet sein. Die Flüssigkeit 10 wird ausgehend von der zweiten Heizungs- und/oder Warmwasserbereitungseinrichtung 12 durch die zweite hydraulische Weiche 8 und anschließend vollständig durch die erste hydraulische Weiche 5 zum Mischventil 14 und zurück zur zweiten Heizungs- und/oder Warmwasserbereitungseinrichtung 12 geleitet.

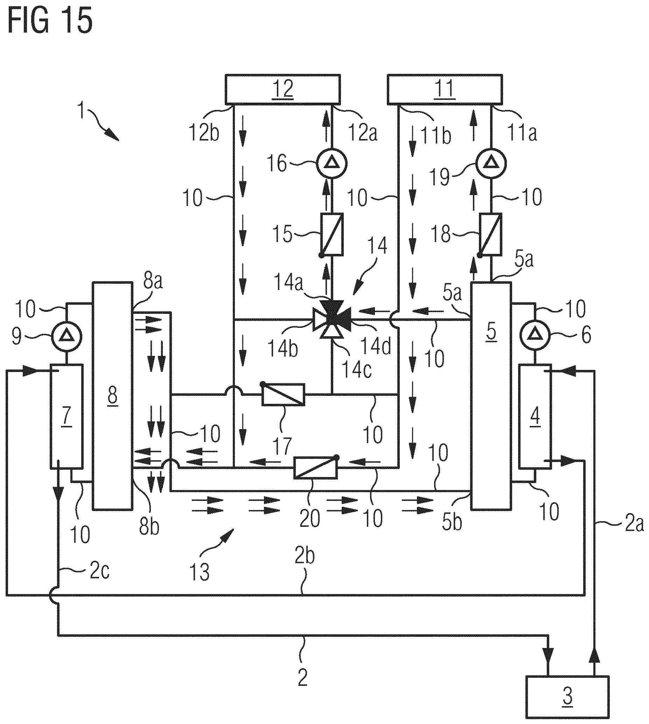

FIG 15 zeigt einen vierzehnten Zustand der Wärmepumpenheizung 1. Wie beim dreizehnten Zustand ist der vierte Anschluss 14d geöffnet, der zweite Anschluss 14b und der dritte Anschluss 14c sind geschlossen. Im Unterschied zum dreizehnten Zustand ist die vierte Pumpe 19 angeschaltet, das heißt die erste Heizungs- und/oder Warmwasserbereitungseinrichtung 11 ist - anders als im dreizehnten Zustand - eingeschaltet. Wie im dreizehnten Zustand liegt ein Betrieb der zweiten Heizungs- und/oder Warmwasserbereitungseinrichtung 12 mit Volllast vor. Die Wärmepumpe ist eingeschaltet. Es bilden sich zwei miteinander kombinierte Kreisläufe.

Zum einen wird die Flüssigkeit 10 ausgehend von der zweiten Heizungs- und/oder Warmwasserbereitungseinrichtung 12 durch die zweite hydraulische Weiche 8 mit der niedrigeren Temperatur und auch vollständig durch die erste hydraulische Weiche 5 mit der höheren Temperatur geführt und gelangt von dort über das Mischventil 14 zurück zur zweiten Heizungs- und/oder Warmwasserbereitungseinrichtung 12. Zum anderen wird die Flüssigkeit 10 ausgehend von der ersten Heizungs- und/oder Warmwasserbereitungseinrichtung 11 durch die erste hydraulische Weiche 5 und die zweite hydraulische Weiche 8 wieder zurück zur ersten Heizungs- und/oder Warmwasserbereitungseinrichtung 11 geleitet.

### Bezugszeichen liste

- 1: Wärmepumpenheizung
- 2: Arbeitsmedium
- 2a: Arbeitsmedium als Heißgas
- 2b: Arbeitsmedium als Heißgas/Kondensat-Gemisch
- 2c: Arbeitsmedium als Kondensat
- 3: Außengerät
- 4: Erster Wärmetauscher
- 5: Erste hydraulische Weiche
- 5a: Oberer Auslass
- 5b: Unterer Einlass
- 6: Erste Pumpe
- 7: Zweiter Wärmetauscher
- 8: Zweite hydraulische Weiche
- 8a: Oberer Auslass
- 8b: Unterer Einlass
- 9: Zweite Pumpe
- 10: Flüssigkeit
- 11: Erste Heizungs- und/oder Warmwasserbereitungseinrichtung
- 11a: Vorlauf
- 11b: Rücklauf
- 12: Zweite Heizungs- und/oder Warmwasserbereitungseinrichtung
- 12a: Vorlauf
- 12b: Rücklauf
- 13: Hydraulisches System
- 14: Mischventil
- 14a: Erster Anschluss
- 14b: Zweiter Anschluss
- 14c: Dritter Anschluss
- 14d: Vierter Anschluss
- 15: Erstes Rückschlagventil
- 16: Dritte Pumpe
- 17: Zweites Rückschlagventil
- 18: Drittes Rückschlagventil
- 19: Vierte Pumpe
- 20: Viertes Rückschlagventil

## Patentansprüche

1. Wärmepumpenheizung (1)
a) mit einem Arbeitsmedium (2), das in einem geschlossenen Arbeitsmedium-Kreislauf einen Kondensator durchströmt,
b) wobei der Kondensator mindestens einen ersten Wärmetauscher (4) und mindestens einen zweiten Wärmetauscher (7) aufweist, die nacheinander an ihrer jeweiligen Primärseite vom Arbeitsmedium (2) durchströmt werden, wobei der erste Wärmetauscher (4) hinsichtlich des Arbeitsmediums (2) stromaufwärts zum zweiten Wärmetauscher (7) angeordnet ist,
c) wobei der erste Wärmetauscher (4) an seiner Sekundärseite von Flüssigkeit (10), insbesondere Wasser, durchströmt werden kann, die im Kreislauf durch eine erste hydraulische Weiche (5) geführt wird, vorzugsweise mittels einer ersten Pumpe (6),
d) wobei der zweite Wärmetauscher (7) an seiner Sekundärseite von Flüssigkeit (10), insbesondere Wasser, durchströmt werden kann, die im Kreislauf durch eine zweite hydraulische Weiche (8) geführt wird, vorzugsweise mittels einer zweiten Pumpe (9),
e) wobei der erste Wärmetauscher (4) und der zweite Wärmetauscher (7) dazu ausgebildet sind, Energie vom Arbeitsmedium (2) an die Flüssigkeit (10) zu übertragen und dadurch die durchströmende Flüssigkeit (10) zu erwärmen,
f) wobei die Wärmepumpenheizung (1) so ausgelegt ist, dass die Flüssigkeit (10) in der ersten hydraulischen Weiche (5) eine höhere Temperatur aufweist als die Flüssigkeit (10) in der zweiten hydraulischen Weiche (8),
g) mit mindestens einer ersten Heizungs- und/oder Warmwasserbereitungseinrichtung (11), insbesondere umfassend einen oder mehrere Heizkörper und/oder einen Warmwasserspeicher und/oder einen Durchlauferhitzer, und mit mindestens einer zweiten Heizungs- und/oder Warmwasserbereitungseinrichtung (12), insbesondere eine Fußbodenheizung, wobei die erste Heizungs- und/oder Warmwasserbereitungseinrichtung (11) für höhere Vorlauftemperaturen bestimmt ist als die zweite Heizungs- und/oder Warmwasserbereitungseinrichtung (12),
h) mit einem hydraulischen System (13) gefüllt mit Flüssigkeit (10), insbesondere Wasser, wobei das hydraulische System (13) dazu ausgelegt ist, dass die Flüssigkeit das hydraulische System (13) durchströmt,
i) wobei das hydraulische System (13) die erste Heizungs- und/oder Warmwasserbereitungseinrichtung (11) und die zweite Heizungs- und/oder Warmwasserbereitungseinrichtung (12) und die erste hydraulische Weiche (5) und die zweite hydraulische Weiche (8) hydraulisch miteinander verbindet,
j) wobei das hydraulische System (13) ein Mischventil (14), insbesondere ein motorisch betriebenes Mischventil (14), zur Änderung und/oder Einstellung des hydraulischen Systems in Abhängigkeit von der aktuellen Heizlast der ersten Heizungs- und/oder Warmwasserbereitungseinrichtung (11) und/oder der zweiten Heizungs- und/oder Warmwasserbereitungseinrichtung (12) aufweist.

2. Wärmepumpenheizung (1) nach Anspruch 1,
**dadurch gekennzeichnet,**
a) **dass** das Mischventil (14) mindestens vier Anschlüsse (14a, 14b, 14c, 14d) aufweist, insbesondere ein Vier-Wege-Ventil ist,
b) wobei der erste Anschluss (14a) mit dem Vorlauf (12a) der zweiten Heizungs- und/oder Warmwasserbereitungseinrichtung (12) verbunden ist, vorzugsweise über ein erstes Rückschlagventil (15) und eine dritte Pumpe (16),
c) wobei der zweite Anschluss (14b) mit dem Rücklauf (12b) der zweiten Heizungs- und/oder Warmwasserbereitungseinrichtung (12) verbunden ist,
d) wobei der dritte Anschluss (14c) mit dem Rücklauf (11b) der ersten Heizungs- und/oder Warmwasserbereitungseinrichtung (11) und, vorzugsweise über ein zweites Rückschlagventil (17), mit einem oberen Auslass (8a) der zweiten hydraulischen Weiche (8) verbunden ist,
e) wobei der vierte Anschluss (14d) mit einem oberen Auslass (5a) der ersten hydraulischen Weiche (5) verbunden ist.

3. Wärmepumpenheizung (1) nach Anspruch 2,
**dadurch gekennzeichnet, dass**
a) der oder ein weiterer oberer Auslass (5a) der ersten hydraulischen Weiche (5) mit dem Vorlauf (11a) der ersten Heizungs- und/oder Warmwasserbereitungseinrichtung (11) verbunden ist, vorzugsweise über ein drittes Rückschlagventil (18) und/oder eine vierte Pumpe (19),
b) der Rücklauf (11b) der ersten Heizungs- und/oder Warmwasserbereitungseinrichtung (11) auch mit einem unteren Einlass (8b) der zweiten hydraulischen Weiche (8) verbunden ist, vorzugsweise über ein viertes Rückschlagventil (20),
c) der oder ein weiterer oberer Auslass (8a) der zweiten hydraulischen Weiche (8) auch mit einem unteren Einlass (5b) der ersten hydraulischen Weiche (5) verbunden ist,
d) der Rücklauf (12b) der zweiten Heizungs- und/oder Warmwasserbereitungseinrichtung (12) auch mit dem unteren Einlass (8b) der zweiten hydraulischen Weiche (8) verbunden ist.

4. Wärmepumpenheizung (1) nach Anspruch 3,
**dadurch gekennzeichnet, dass**
a) der erste Anschluss (14a) des Mischventils (14) immer geöffnet ist und der zweite Anschluss (14b) und der dritte Anschluss (14c) und der vierte Anschluss (14d) geöffnet und geschlossen werden können,
wobei die Wärmepumpenheizung einen ersten bis vierzehnten Zustand einnehmen kann:
b) wobei in einem ersten Zustand der Wärmepumpenheizung (1) der zweite Anschluss (14b) zumindest teilweise geöffnet ist und der dritte Anschluss (14c) und der vierte Anschluss (14d) geschlossen sind, und ferner die dritte Pumpe (16) angeschaltet und die vierte Pumpe (19) ausgeschaltet ist, insbesondere für einen gesättigten Betrieb der zweiten Heizungs- und/oder Warmwasserbereitungseinrichtung (12) bei ausgeschalteter erster Heizungs- und/oder Warmwasserbereitungseinrichtung (11),
c) wobei in einem zweiten Zustand der Wärmepumpenheizung (1) der zweite Anschluss (14b) zumindest teilweise geöffnet ist und der dritte Anschluss (14c) und der vierte Anschluss (14d) geschlossen sind, und ferner die dritte Pumpe (16) und die vierte Pumpe (19) angeschaltet sind, insbesondere für einen gesättigten Betrieb der zweiten Heizungs- und/oder Warmwasserbereitungseinrichtung (12) bei eingeschalteter erster Heizungs- und/oder Warmwasserbereitungseinrichtung (11),
d) wobei in einem dritten Zustand der Wärmepumpenheizung (1) der zweite Anschluss (14b) und der dritte Anschluss (14c) zumindest teilweise geöffnet sind und der vierte Anschluss (14d) geschlossen ist, und ferner die dritte Pumpe (16) angeschaltet und die vierte Pumpe (19) ausgeschaltet ist, insbesondere für einen Betrieb der zweiten Heizungs- und/oder Warmwasserbereitungseinrichtung (12) mit geringer Last bei ausgeschalteter erster Heizungs- und/oder Warmwasserbereitungseinrichtung (11),
e) wobei in einem vierten Zustand der Wärmepumpenheizung (1) der zweite Anschluss (14b) und der dritte Anschluss (14c) zumindest teilweise geöffnet sind und der vierte Anschluss (14d) geschlossen ist, und ferner die dritte Pumpe (16) und die vierte Pumpe (19) angeschaltet sind, insbesondere für einen Betrieb der zweiten Heizungs- und/oder Warmwasserbereitungseinrichtung (12) mit geringer Last bei eingeschalteter erster Heizungs- und/oder Warmwasserbereitungseinrichtung (11),
f) wobei in einem fünften Zustand der Wärmepumpenheizung (1) der zweite Anschluss (14b) und der dritte Anschluss (14c) zumindest teilweise geöffnet sind und der vierte Anschluss (14d) geschlossen ist, und ferner die dritte Pumpe (16) und die vierte Pumpe (19) angeschaltet sind, wobei die vierte Pumpe (19) mit höherer Drehzahl betrieben wird als im vierten Zustand, insbesondere für einen Betrieb der zweiten Heizungs- und/oder Warmwasserbereitungseinrichtung (12) mit geringer Last bei eingeschalteter erster Heizungs- und/oder Warmwasserbereitungseinrichtung (11), wobei die erste Heizungs- und/oder Warmwasserbereitungseinrichtung (11) mit höherer Last als im vierten Zustand betrieben wird,
g) wobei in einem sechsten Zustand der Wärmepumpenheizung (1) der zweite Anschluss (14b) und der dritte Anschluss (14c) zumindest teilweise geöffnet sind und der vierte Anschluss (14d) geschlossen ist, und ferner die dritte Pumpe (16) und die vierte Pumpe (19) angeschaltet sind, wobei die dritte Pumpe (16) mit höherer Drehzahl betrieben wird als im vierten Zustand und die vierte Pumpe (19) mit höherer Drehzahl betrieben wird als im vierten Zustand, insbesondere für einen Betrieb der zweiten Heizungs- und/oder Warmwasserbereitungseinrichtung (12) mit höherer Last bei eingeschalteter erster Heizungs- und/oder Warmwasserbereitungseinrichtung (11), wobei die erste Heizungs- und/oder Warmwasserbereitungseinrichtung (11) mit höherer Last als im vierten Zustand betrieben wird,
h) wobei in einem siebten Zustand der Wärmepumpenheizung (1) der dritte Anschluss (14c) zumindest teilweise geöffnet ist und der zweite Anschluss (14b) und vierte Anschluss (14d) geschlossen sind, und ferner die dritte Pumpe (16) angeschaltet und die vierte Pumpe (19) ausgeschaltet ist, insbesondere für einen Betrieb der zweiten Heizungs- und/oder Warmwasserbereitungseinrichtung (12) mit mittlerer Last bei ausgeschalteter erster Heizungs- und/oder Warmwasserbereitungseinrichtung (11),
i) wobei in einem achten Zustand der Wärmepumpenheizung (1) der dritte Anschluss (14c) zumindest teilweise geöffnet ist und der zweite Anschluss (14b) und vierte Anschluss (14d) geschlossen sind, und ferner die dritte Pumpe (16) und die vierte Pumpe (19) angeschaltet sind, insbesondere für einen Betrieb der zweiten Heizungs- und/oder Warmwasserbereitungseinrichtung (12) mit mittlerer Last bei eingeschalteter erster Heizungs- und/oder Warmwasserbereitungseinrichtung (11),
j) wobei in einem neunten Zustand der Wärmepumpenheizung (1) der dritte Anschluss (14c) und der vierte Anschluss (14d) zumindest teilweise geöffnet sind und der zweite Anschluss (14b) geschlossen ist, und ferner die dritte Pumpe (16) angeschaltet und die vierte Pumpe (19) ausgeschaltet ist, insbesondere für einen Betrieb der zweiten Heizungs- und/oder Warmwasserbereitungseinrichtung (12) mit höherer Last bei ausgeschalteter erster Heizungs- und/oder Warmwasserbereitungseinrichtung (11),
k) wobei in einem zehnten Zustand der Wärmepumpenheizung (1) der dritte Anschluss (14c) und der vierte Anschluss (14d) zumindest teilweise geöffnet sind und der zweite Anschluss (14b) geschlossen ist, und ferner die dritte Pumpe (16) und die vierte Pumpe (19) angeschaltet sind, insbesondere für einen Betrieb der zweiten Heizungs- und/oder Warmwasserbereitungseinrichtung (12) mit höherer Last bei eingeschalteter erster Heizungs- und/oder Warmwasserbereitungseinrichtung (11),
m) wobei in einem elften Zustand der Wärmepumpenheizung (1) der dritte Anschluss (14c) und der vierte Anschluss (14d) zumindest teilweise geöffnet sind und der zweite Anschluss (14b) geschlossen ist, und ferner die dritte Pumpe (16) und die vierte Pumpe (19) angeschaltet sind, wobei die vierte Pumpe (19) mit höherer Drehzahl betrieben wird als im zehnten Zustand, insbesondere für einen Betrieb der zweiten Heizungs- und/oder Warmwasserbereitungseinrichtung (12) mit höherer Last bei eingeschalteter erster Heizungs- und/oder Warmwasserbereitungseinrichtung (11), wobei die erste Heizungs- und/oder Warmwasserbereitungseinrichtung (11) mit höherer Last als im zehnten Zustand betrieben wird,
n) wobei in einem zwölften Zustand der Wärmepumpenheizung (1) der dritte Anschluss (14c) und der vierte Anschluss (14d) zumindest teilweise geöffnet sind und der zweite Anschluss (14b) geschlossen ist, und ferner die dritte Pumpe (16) und die vierte Pumpe (19) angeschaltet sind, wobei die dritte Pumpe (16) mit höherer Drehzahl betrieben wird als im zehnten Zustand, insbesondere für einen Betrieb der zweiten Heizungs- und/oder Warmwasserbereitungseinrichtung (12) mit sehr hoher Last bei eingeschalteter erster Heizungs- und/oder Warmwasserbereitungseinrichtung (11),
I) wobei in einem dreizehnten Zustand der Wärmepumpenheizung (1) der vierte Anschluss (14d) zumindest teilweise geöffnet ist und der zweite Anschluss (14b) und der dritte Anschluss (14c) geschlossen sind, und ferner die dritte Pumpe (16) angeschaltet und die vierte Pumpe (19) ausgeschaltet ist, insbesondere für einen Betrieb der zweiten Heizungs- und/oder Warmwasserbereitungseinrichtung (12) mit Volllast bei ausgeschalteter erster Heizungs- und/oder Warmwasserbereitungseinrichtung (11), und
k) wobei in einem vierzehnten Zustand der Wärmepumpenheizung (1) der vierte Anschluss (14d) zumindest teilweise geöffnet ist und der zweite Anschluss (14b) und der dritte Anschluss (14c) geschlossen sind, und ferner die dritte Pumpe (16) und die vierte Pumpe (19) angeschaltet sind, insbesondere für einen Betrieb der zweiten Heizungs- und/oder Warmwasserbereitungseinrichtung (12) mit Volllast bei eingeschalteter erster Heizungs- und/oder Warmwasserbereitungseinrichtung (11).

5. Wärmepumpenheizung (1) nach einem der vorhergehenden Ansprüche,
**dadurch gekennzeichnet, dass** die Wärmepumpenheizung (1) eine Steuereinrichtung zur Einstellung des Mischventils (14) in Abhängigkeit von der aktuellen Heizlast der ersten Heizungs- und/oder Warmwasserbereitungseinrichtung (11) und/oder der zweiten Heizungs- und/oder Warmwasserbereitungseinrichtung (12) aufweist.

6. Wärmepumpenheizung (1) nach einem der vorhergehenden Ansprüche,
**dadurch gekennzeichnet, dass**
zur Ermittlung der aktuellen Heizlast der ersten Heizungs- und/oder Warmwasserbereitungseinrichtung (11) Temperatursensoren zur Bestimmung der Vorlauftemperatur und/oder der Rücklauftemperatur der ersten Heizungs- und/oder Warmwasserbereitungseinrichtung (11) vorgesehen sind, und/oder zur Ermittlung der aktuellen Heizlast der zweiten Heizungs- und/oder Warmwasserbereitungseinrichtung (12) Temperatursensoren zur Bestimmung der Vorlauftemperatur und/oder der Rücklauftemperatur der zweiten Heizungs- und/oder Warmwasserbereitungseinrichtung (12) vorgesehen sind.

7. Verfahren zum Betreiben einer Wärmepumpenheizung (1) nach einem der vorhergehenden Ansprüche,
bei dem die aktuelle Heizlast der ersten Heizungs- und/oder Warmwasserbereitungseinrichtung (11) und/oder die aktuelle Heizlast der zweiten Heizungs- und/oder Warmwasserbereitungseinrichtung (12) ermittelt und anhand des Ergebnisses dieser Ermittlung das Mischventil (14) des hydraulischen Systems (13) der Wärmepumpenheizung (19) eingestellt wird.

8. Verfahren nach Anspruch 7, zum Betreiben einer Wärmepumpenheizung (1) nach Anspruch 4,
**dadurch gekennzeichnet, dass**
das Mischventil (14) anhand des Ergebnisses der Ermittlung der aktuellen Heizlast der ersten Heizungs- und/oder Warmwasserbereitungseinrichtung (11) und/oder der zweiten Heizungs- und/oder Warmwasserbereitungseinrichtung (12) derart eingestellt wird, dass die Wärmepumpenheizung (1) im ersten oder im zweiten oder im dritten oder im vierten oder im fünften oder im sechsten oder im siebten oder im achten oder im neunten oder im zehnten Zustand betrieben wird.

## Claims

1. A heat pump heater (1)
a) comprising a working medium (2) flowing through a condenser in a closed working medium circuit,
b) wherein the condenser has at least one first heat exchanger (4) and at least one second heat exchanger (7), through which the working medium (2) flows in succession on their respective primary side, wherein the first heat exchanger (4) is arranged upstream of the second heat exchanger (7) with respect to the working medium (2),
c) wherein a liquid (10), in particular water, is able to flow through the first heat exchanger (4) on its secondary side, which liquid is circulated through a first hydraulic switch (5), preferably by means of a first pump (6),
d) wherein a liquid (10), in particular water, is able to flow through the second heat exchanger (7) on its secondary side, which liquid is circulated through a second hydraulic switch (8), preferably by means of a second pump (9),
e) wherein the first heat exchanger (4) and the second heat exchanger (7) are designed to transfer energy from the working medium (2) to the liquid (10) and thereby heat the liquid (10) flowing through,
f) wherein the heat pump heater (1) is designed such that the liquid (10) in the first hydraulic switch (5) has a higher temperature than the liquid (10) in the second hydraulic switch (8),
g) having at least one first heating and/or hot water preparation device (11), in particular comprising one or more radiators and/or a hot water tank and/or a continuous flow heater, and comprising at least one second heating and/or hot water preparation device (12), in particular underfloor heating, wherein the first heating and/or hot water preparation device (11) is intended for higher flow temperatures than the second heating and/or hot water preparation device (12),
h) comprising a hydraulic system (13) filled with liquid (10), in particular water, wherein the hydraulic system (13) is designed for the liquid to flow through the hydraulic system (13),
i) wherein the hydraulic system (13) hydraulically connects the first heating and/or hot water preparation device (11) and the second heating and/or hot water preparation device (12) and connects the first hydraulic switch (5) and the second hydraulic switch (8) to one another,
j) wherein the hydraulic system (13) has a mixing valve (14), in particular a motor-operated mixing valve (14), for changing and/or adjusting the hydraulic system as a function of the current heating load of the first heating and/or hot water preparation device (11) and/or the second heating and/or hot water preparation device (12).

2. The heat pump heater (1) according to claim 1, **characterized in that**
a) the mixing valve (14) has at least four connections (14a, 14b, 14c, 14d), and in particular is a four-way valve,
b) wherein the first connection (14a) is connected to the supply (12a) of the second heating and/or hot water preparation device (12), preferably via a first check valve (15) and a third pump (16),
c) wherein the second connection (14b) is connected to the return (12b) of the second heating and/or hot water preparation device (12),
d) wherein the third connection (14c) is connected to the return (11b) of the first heating and/or hot water preparation device (11) and, preferably via a second check valve (17), to an upper outlet (8a) of the second hydraulic switch (8),
e) wherein the fourth connection (14d) is connected to an upper outlet (5a) of the first hydraulic switch (5).

3. The heat pump heater (1) according to claim 2, **characterized in that**
a) the or a further upper outlet (5a) of the first hydraulic switch (5) is connected to the supply (11a) of the first heating and/or hot water preparation device (11), preferably via a third check valve (18) and/or a fourth pump (19),
b) the return (11b) of the first heating and/or hot water preparation device (11) is also connected to a lower inlet (8b) of the second hydraulic switch (8), preferably via a fourth check valve (20),
c) the or a further upper outlet (8a) of the second hydraulic switch (8) is also connected to a lower inlet (5b) of the first hydraulic switch (5),
d) the return (12b) of the second heating and/or hot water preparation device (12) is also connected to the lower inlet (8b) of the second hydraulic switch (8).

4. The heat pump heater (1) according to claim 3, **characterized in that**
a) the first connection (14a) of the mixing valve (14) is always open and the second connection (14b) and the third connection (14c) and the fourth connection (14d) can be opened and closed, wherein the heat pump heater may take on a first to fourteenth state:
b) wherein in a first state of the heat pump heater (1), the second connection (14b) is at least partially open and the third connection (14c) and the fourth connection (14d) are closed, and further the third pump (16) is switched on and the fourth pump (19) is switched off, in particular for saturated operation of the second heating and/or hot water preparation device (12) when the first heating and/or hot water preparation device (11) is switched off,
c) wherein in a second state of the heat pump heater (1), the second connection (14b) is at least partially open and the third connection (14c) and the fourth connection (14d) are closed, and further the third pump (16) and the fourth pump (19) are switched on, in particular for saturated operation of the second heating and/or hot water preparation device (12) when the first heating and/or hot water preparation device (11) is switched on,
d) wherein in a third state of the heat pump heater (1), the second connection (14b) and the third connection (14c) are at least partially open and the fourth connection (14d) is closed, and further the third pump (16) is switched on and the fourth pump (19) is switched off, in particular for operation of the second heating and/or hot water preparation device (12) with low load when the first heating and/or hot water preparation device (11) is switched off,
e) wherein in a fourth state of the heat pump heater (1), the second connection (14b) and the third connection (14c) are at least partially open and the fourth connection (14d) is closed, and further the third pump (16) and the fourth pump (19) are switched on, in particular for operation of the second heating and/or hot water preparation device (12) with low load when the first heating and/or hot water preparation device (11) is switched on,
f) wherein in a fifth state of the heat pump heater (1), the second connection (14b) and the third connection (14c) are at least partially open and the fourth connection (14d) is closed, and further the third pump (16) and the fourth pump (19) are switched on, wherein the fourth pump (19) is operated at a higher speed than in the fourth state, in particular for operating the second heating and/or hot water preparation device (12) with low load when the first heating and/or hot water preparation device is switched on (11), wherein the first heating and/or hot water preparation device (11) is operated with a higher load than in the fourth state,
g) wherein in a sixth state of the heat pump heater (1), the second connection (14b) and the third connection (14c) are at least partially open and the fourth connection (14d) is closed, and further the third pump (16) and the fourth pump (19) are switched on, wherein the third pump (16) is operated at a higher speed than in the fourth state and the fourth pump (19) is operated at a higher speed than in the fourth state, in particular for operating the second heating and/or hot water preparation device (12) with a higher load when the first heating and/or hot water preparation device (11) is switched on, wherein the first heating and/or hot water preparation device (11) is operated with a higher load than in the fourth state,
h) wherein in a seventh state of the heat pump heater (1), the third connection (14c) is at least partially open and the second connection (14b) and fourth connection (14d) are closed, and further the third pump (16) is switched on and the fourth pump (19) is switched off, in particular for operation of the second heating and/or hot water preparation device (12) with medium load when the first heating and/or hot water preparation device (11) is switched off,
i) wherein in an eighth state of the heat pump heater (1), the third connection (14c) is at least partially open and the second connection (14b) and fourth connection (14d) are closed, and further the third pump (16) and the fourth pump (19) are switched on, in particular for operation of the second heating and/or hot water preparation device (12) with medium load when the first heating and/or hot water preparation device (11) is switched on,
j) wherein in a ninth state of the heat pump heater (1), the third connection (14c) and the fourth connection (14d) are at least partially open and the second connection (14b) is closed, and further the third pump (16) is switched on and the fourth pump (19) is switched off, in particular for operation of the second heating and/or hot water preparation device (12) with a higher load when the first heating and/or hot water preparation device (11) is switched off,
k) wherein in a tenth state of the heat pump heater (1), the third connection (14c) and the fourth connection (14d) are at least partially open and the second connection (14b) is closed, and further the third pump (16) and the fourth pump (19) are switched on, in particular for operation of the second heating and/or hot water preparation device (12) with a higher load when the first heating and/or hot water preparation device (11) is switched on,
m) wherein in an eleventh state of the heat pump heater (1), the third connection (14c) and the fourth connection (14d) are at least partially open and the second connection (14b) is closed, and further the third pump (16) and the fourth pump (19) are switched on, wherein the fourth pump (19) is operated at a higher speed than in the tenth state, in particular for operating the second heating and/or hot water preparation device (12) with a higher load when the first heating and/or hot water preparation device is switched on (11), wherein the first heating and/or hot water preparation device (11) is operated with a higher load than in the tenth state,
n) wherein in a twelfth state of the heat pump heater (1), the third connection (14c) and the fourth connection (14d) are at least partially open and the second connection (14b) is closed, and further the third pump (16) and the fourth pump (19) are switched on, wherein the third pump (16) is operated at a higher speed than in the tenth state, in particular for operating the second heating and/or hot water preparation device (12) with a very high load when the first heating and/or hot water preparation device is switched on (11),
l) wherein in a thirteenth state of the heat pump heater (1), the fourth connection (14d) is at least partially open and the second connection (14b) and the third connection (14c) are closed, and further the third pump (16) is switched on and the fourth pump (19) is switched off, in particular for operating the second heating and/or hot water preparation device (12) at full load when the first heating and/or hot water preparation device (11) is switched off, and
k) wherein in a fourteenth state of the heat pump heater (1), the fourth connection (14d) is at least partially open and the second connection (14b) and the third connection (14c) are closed, and further the third pump (16) and the fourth pump (19) are switched on, in particular for operating the second heating and/or hot water preparation device (12) at full load when the first heating and/or hot water preparation device (11) is switched on.

5. The heat pump heater (1) according to one of the preceding claims, **characterized in that** the heat pump heater (1) has a control device for setting the mixing valve (14) as a function of the current heating load of the first heating and/or hot water preparation device (11) and/or of the second heating and/or hot water preparation device (12).

6. The heat pump heater (1) according to one of the preceding claims, **characterized in that** for determining the current heating load of the first heating and/or hot water preparation device (11), temperature sensors for determining the flow temperature and/or the return temperature of the first heating and/or hot water preparation device (11) are provided, and/or for determining the current heating load of the second heating and/or hot water preparation device (12), temperature sensors for determining the flow temperature and/or the return temperature of the second heating and/or hot water preparation device (12) are provided.

7. A method for operating a heat pump heater (1) according to one of the preceding claims, in which the current heating load of the first heating and/or hot water preparation device (11) and/or the current heating load of the second heating and/or hot water preparation device (12) is determined and on the basis the result of this determination, the mixing valve (14) of the hydraulic system (13) of the heat pump heater (19) is set.

8. The method according to claim 7 for operating a heat pump heater (1) according to claim 4, **characterized in that** the mixing valve (14) is set on the basis of the result of the determination of the current heating load of the first heating and/or hot water preparation device (11) and/or the second heating and/or hot water preparation device (12), such that the heat pump heater (1) is operated in the first or in the second or in the third or in the fourth or in the fifth or in the sixth or in the seventh or in the eighth or in the ninth or tenth state.

## Revendications

1. Chauffage par pompe à chaleur (1)
a) comportant un fluide de travail (2) qui traverse un condenseur dans un circuit fermé de fluide de travail,
b) le condenseur comportant au moins un premier échangeur de chaleur (4) et au moins un second échangeur de chaleur (7) qui sont traversés l'un après l'autre par le fluide de travail (2) au niveau de leur côté primaire respectif, le premier échangeur de chaleur (4) étant disposé en amont du second échangeur de chaleur (7) par rapport au fluide de travail (2),
c) le premier échangeur de chaleur (4) pouvant être, au niveau de son côté secondaire, traversé par du liquide (10), en particulier de l'eau, lequel liquide est guidé dans le circuit par un premier séparateur hydraulique (5), de préférence au moyen d'une première pompe (6),
d) le second échangeur de chaleur (7) pouvant être, au niveau de son côté secondaire, traversé par du liquide (10), en particulier de l'eau, lequel liquide est guidé dans le circuit par un second séparateur hydraulique (8), de préférence au moyen d'une deuxième pompe (9),
e) le premier échangeur de chaleur (4) et le second échangeur de chaleur (7) étant conçus pour transférer de l'énergie du fluide de travail (2) au liquide (10) et pour chauffer ainsi le liquide (10) en écoulement,
f) le chauffage par pompe à chaleur (1) étant conçu de telle manière que le liquide (10) dans le premier séparateur hydraulique (5) présente une température supérieure à celle du liquide (10) dans le second séparateur hydraulique (8),
g) comportant au moins un premier dispositif de chauffage et/ou de préparation d'eau chaude (11), comprenant en particulier un ou plusieurs corps de chauffe et/ou un chauffe-eau à accumulation et/ou un chauffe-eau instantané, et comportant au moins un second dispositif de chauffage et/ou de préparation d'eau chaude (12), en particulier un chauffage par le sol, le premier dispositif de chauffage et/ou de préparation d'eau chaude (11) étant destiné à des températures d'arrivée plus élevées que celle du second dispositif de chauffage et/ou de préparation d'eau chaude (12),
h) comportant un système hydraulique (13) rempli de liquide (10), en particulier d'eau, le système hydraulique (13) étant conçu de manière à être traversé par le liquide,
i) le système hydraulique (13) reliant hydrauliquement le premier dispositif de chauffage et/ou de préparation d'eau chaude (11) et le second dispositif de chauffage et/ou de préparation d'eau chaude (12), et le premier séparateur hydraulique (5) et le second séparateur hydraulique (8),
j) le système hydraulique (13) comportant une vanne mélangeuse (14), en particulier une vanne mélangeuse motorisée (14), servant à modifier et/ou à régler le système hydraulique en fonction de la charge thermique actuelle du premier dispositif de chauffage et/ou de préparation d'eau chaude (11) et/ou du second dispositif de chauffage et/ou de préparation d'eau chaude (12).

2. Chauffage par pompe à chaleur (1) selon la revendication 1, **caractérisé en ce**
a) **que** la vanne mélangeuse (14) comporte au moins quatre raccords (14a, 14b, 14c, 14d), en particulier une vanne à quatre voies,
b) le premier raccord (14a) étant relié à la canalisation d'entrée (12a) du second dispositif de chauffage et/ou de préparation d'eau chaude (12), de préférence par l'intermédiaire d'un premier clapet anti-retour (15) et d'une troisième pompe (16),
c) le deuxième raccord (14b) étant relié à la canalisation de sortie (12b) du second dispositif de chauffage et/ou de préparation d'eau chaude (12),
d) le troisième raccord (14c) étant relié à la canalisation de sortie (11b) du premier dispositif de chauffage et/ou de préparation d'eau chaude (11) et, de préférence par l'intermédiaire d'un deuxième clapet anti-retour (17), à une sortie supérieure (8a) du second séparateur hydraulique (8),
e) le quatrième raccord (14d) étant relié à une sortie supérieure (5a) du premier séparateur hydraulique (5).

3. Chauffage par pompe à chaleur (1) selon la revendication 2, **caractérisé en ce que**
a) la sortie ou une autre sortie supérieure (5a) du premier séparateur hydraulique (5) est reliée à la canalisation d'entrée (11a) du premier dispositif de chauffage et/ou de préparation d'eau chaude (11), de préférence par l'intermédiaire d'un troisième clapet anti-retour (18) et/ou d'une quatrième pompe (19),
b) **en ce que** la canalisation de sortie (11b) du premier dispositif de chauffage et/ou de préparation d'eau chaude (11) est également reliée à une entrée inférieure (8b) du second séparateur hydraulique (8), de préférence par l'intermédiaire d'un quatrième clapet anti-retour (20),
c) **en ce que** la sortie ou une autre sortie supérieure (8a) du second séparateur hydraulique (8) est également reliée à une entrée inférieure (5b) du premier séparateur hydraulique (5),
d) **en ce que** la canalisation de sortie (12b) du second dispositif de chauffage et/ou de préparation d'eau chaude (12) est également reliée à l'entrée inférieure (8b) du second séparateur hydraulique (8).

4. Chauffage par pompe à chaleur (1) selon la revendication 3, **caractérisé en ce que**
a) le premier raccord (14a) de la vanne mélangeuse (14) est toujours ouverte, et **en ce que** le deuxième raccord (14b), le troisième raccord (14c) et le quatrième raccord (14d) peuvent être ouverts et fermés, le chauffage par pompe à chaleur pouvant occuper un premier à un quatorzième état :
b) le deuxième raccord (14b) étant, dans un premier état du chauffage par pompe à chaleur (1), au moins partiellement ouvert et le troisième raccord (14c) et le quatrième raccord (14d) étant fermés, et, en outre, la troisième pompe (16) étant activée et la quatrième pompe (19) étant désactivée, en particulier pour un fonctionnement saturé du second dispositif de chauffage et/ou de préparation d'eau chaude (12) lorsque le premier dispositif de chauffage et/ou de préparation d'eau chaude (11) est désactivé,
c) le deuxième raccord (14b) étant, dans un deuxième état du chauffage par pompe à chaleur (1), au moins partiellement ouvert et le troisième raccord (14c) et le quatrième raccord (14d) étant fermés, et, en outre, la troisième pompe (16) et la quatrième pompe (19) étant activées, en particulier pour un fonctionnement saturé du second dispositif de chauffage et/ou de préparation d'eau chaude (12) lorsque le premier dispositif de chauffage et/ou de préparation d'eau chaude (11) est activé,
d) le deuxième raccord (14b) et le troisième raccord (14c) étant, dans un troisième état du chauffage par pompe à chaleur (1), au moins partiellement ouverts et le quatrième raccord (14d) étant fermé, et, en outre, la troisième pompe (16) étant activée et la quatrième pompe (19) étant désactivée, en particulier pour le fonctionnement du second dispositif de chauffage et/ou de préparation d'eau chaude (12) à faible charge lorsque le premier dispositif de chauffage et/ou de préparation d'eau chaude (11) est désactivé,
e) le deuxième raccord (14b) et le troisième raccord (14c) étant, dans un quatrième état du chauffage par pompe à chaleur (1), au moins partiellement ouverts et le quatrième raccord (14d) étant fermé, et, en outre, la troisième pompe (16) et la quatrième pompe (19) étant activées, en particulier pour le fonctionnement du second dispositif de chauffage et/ou de préparation d'eau chaude (12) à faible charge lorsque le premier dispositif de chauffage et/ou de préparation d'eau chaude (11) est activé,
f) le deuxième raccord (14b) et le troisième raccord (14c) étant, dans un cinquième état du chauffage par pompe à chaleur (1), au moins partiellement ouverts et le quatrième raccord (14d) étant fermé, et, en outre, la troisième pompe (16) et la quatrième pompe (19) étant activées, la quatrième pompe (19) fonctionnant à une vitesse supérieure à celle du quatrième état, en particulier pour le fonctionnement du second dispositif de chauffage et/ou de préparation d'eau chaude (12) à faible charge lorsque le premier dispositif de chauffage et/ou de préparation d'eau chaude (11) est activé, le premier dispositif de chauffage et/ou de préparation d'eau chaude (11) fonctionnant avec une charge supérieure à celle du quatrième état,
g) le deuxième raccord (14b) et le troisième raccord (14c) étant, dans un sixième état du chauffage par pompe à chaleur (1), au moins partiellement ouverts et le quatrième raccord (14d) étant fermé, et, en outre, la troisième pompe (16) et la quatrième pompe (19) étant activées, la troisième pompe (16) fonctionnant à une vitesse supérieure à celle du quatrième état, et la quatrième pompe (19) fonctionnant à une vitesse supérieure à celle du quatrième état, en particulier pour le fonctionnement du second dispositif de chauffage et/ou de préparation d'eau chaude (12) à charge plus élevée lorsque le premier dispositif de chauffage et/ou de préparation d'eau chaude (11) est activé, le premier dispositif de chauffage et/ou de préparation d'eau chaude (11) fonctionnant avec une charge supérieure à celle du quatrième état,
h) le troisième raccord (14c) étant, dans un septième état du chauffage par pompe à chaleur (1), au moins partiellement ouvert et le deuxième raccord (14b) et le quatrième raccord (14d) étant fermés, et, en outre, la troisième pompe (16) étant activée et la quatrième pompe (19) étant désactivé, en particulier pour le fonctionnement du second dispositif de chauffage et/ou de préparation d'eau chaude (12) à charge moyenne lorsque le premier dispositif de chauffage et/ou de préparation d'eau chaude (11) est désactivé,
i) le troisième raccord (14c) étant, dans un huitième état du chauffage par pompe à chaleur (1), au moins partiellement ouvert et le deuxième raccord (14b) et le quatrième raccord (14d) sont fermés, et, en outre, la troisième pompe (16) et la quatrième pompe (19) étant activés, en particulier pour le fonctionnement du second dispositif de chauffage et/ou de préparation d'eau chaude (12) à charge moyenne lorsque le premier dispositif de chauffage et/ou de préparation d'eau chaude (11) est activé,
j) le troisième raccord (14c) et le quatrième raccord (14d) étant, dans un neuvième état du chauffage par pompe à chaleur (1), au moins partiellement ouverts et le deuxième raccord (14b) est fermé, et, en outre, la troisième pompe (16) étant activée et la quatrième pompe (19) est désactivée, en particulier pour le fonctionnement du second dispositif de chauffage et/ou de préparation d'eau chaude (12) à charge plus élevée lorsque le premier dispositif de chauffage et/ou de préparation d'eau chaude (11) est désactivé,
k) le troisième raccord (14c) et le quatrième raccord (14d) étant, dans un dixième état du chauffage par pompe à chaleur (1), au moins partiellement ouverts et le deuxième raccord (14b) est fermé, et, en outre, la troisième pompe (16) et la quatrième pompe (19) étant activées, en particulier pour le fonctionnement du deuxième dispositif de chauffage et/ou de préparation d'eau chaude (12) à charge plus élevée lorsque le premier dispositif de chauffage et/ou de préparation d'eau chaude (11) est activé,
m) le troisième raccord (14c) et le quatrième raccord (14d) étant, dans un onzième état du chauffage par pompe à chaleur (1), au moins partiellement ouverts et le deuxième raccord (14b) est fermé, et, en outre, la troisième pompe (16) et la quatrième pompe (19) étant activées, la quatrième pompe (19) fonctionnant à une vitesse supérieure à celle du dixième état, en particulier pour le fonctionnement du second dispositif de chauffage et/ou de préparation d'eau chaude (12) à charge plus élevée lorsque le premier dispositif de chauffage et/ou de préparation d'eau chaude (11) est activé, le premier dispositif de chauffage et/ou de préparation d'eau chaude (11) fonctionnant avec une charge supérieure à celle du dixième état,
n) le troisième raccord (14c) et le quatrième raccord (14d) étant, dans un douzième état du chauffage par pompe à chaleur (1), au moins partiellement ouverts et le deuxième raccord (14b) est fermé, et, en outre, la troisième pompe (16) et la quatrième pompe (19) étant activées, la troisième pompe (16) fonctionnant à une vitesse supérieure à celle du dixième état, en particulier pour le fonctionnement du second dispositif de chauffage et/ou de préparation d'eau chaude (12) à charge très élevée lorsque le premier dispositif de chauffage et/ou de préparation d'eau chaude (11) est activé,
l) le quatrième raccord (14d) étant, dans un treizième état du chauffage par pompe à chaleur (1), au moins partiellement ouvert et le deuxième raccord (14b) et le troisième raccord (14c) sont fermés, et, en outre, la troisième pompe (16) étant activée et la quatrième pompe (19) étant désactivé, en particulier pour un fonctionnement du second dispositif de chauffage et/ou de préparation d'eau chaude (12) à pleine charge lorsque le premier dispositif de chauffage et/ou de préparation d'eau chaude (11) est désactivé, et
k) le quatrième raccord (14d) étant, dans un quatorzième état du chauffage par pompe à chaleur (1), au moins partiellement ouvert et le deuxième raccord (14b) et le troisième raccord (14c) étant fermés, et, en outre, la troisième pompe (16) et la quatrième pompe (19) étant activées, en particulier pour un fonctionnement du deuxième dispositif de chauffage et/ou de préparation d'eau chaude (12) à pleine charge lorsque le premier dispositif de chauffage et/ou de préparation d'eau chaude (11) est activé.

5. Chauffage par pompe à chaleur (1) selon l'une des revendications précédentes, **caractérisé en ce que** le chauffage par pompe à chaleur (1) est un dispositif de commande servant à régler la vanne mélangeuse (14) en fonction de la charge thermique actuelle du premier dispositif de chauffage et/ou de préparation d'eau chaude (11) et/ou du second dispositif de chauffage et/ou de préparation d'eau chaude (12).

6. Chauffage par pompe à chaleur (1) selon l'une des revendications précédentes, **caractérisé en ce que**, pour déterminer la charge thermique actuelle du premier dispositif de chauffage et/ou de préparation d'eau chaude (11), des capteurs de température servant à déterminer la température d'arrivée et/ou la température de retour du premier dispositif de chauffage et/ou de préparation d'eau chaude (11) sont prévus, et/ou pour déterminer la charge thermique actuelle du second dispositif de chauffage et/ou de préparation d'eau chaude (12), des capteurs de température servant à déterminer la température d'arrivée et/ou la température de retour du second dispositif de chauffage et/ou de préparation d'eau chaude (12) sont prévus.

7. Procédé pour faire fonctionner un chauffage par pompe à chaleur (1) selon l'une des revendications précédentes, dans lequel la charge thermique actuelle du premier dispositif de chauffage et/ou de préparation d'eau chaude (11) et/ou la charge thermique actuelle du second dispositif de chauffage et/ou de préparation d'eau chaude (12) est déterminée, et sur la base du résultat de ladite détermination, la vanne mélangeuse (14) du système hydraulique (13) du chauffage par pompe à chaleur (19) est réglée.

8. Procédé selon la revendication 7, pour faire fonctionner un chauffage par pompe à chaleur (1) selon la revendication 4, **caractérisé en ce que** la vanne mélangeuse (14), sur la base du résultat de la détermination de la charge thermique actuelle du premier dispositif de chauffage et/ou de préparation d'eau chaude (11) et/ou du second dispositif de chauffage et/ou de préparation d'eau chaude (12), est réglée de telle manière que le chauffage par pompe à chaleur (1) fonctionne dans le premier ou dans le deuxième ou dans le troisième ou dans le quatrième ou dans le cinquième ou dans le sixième ou dans le septième ou dans le huitième ou dans le neuvième ou le dixième état.
